# EUROPEAN PATENT SPECIFICATION

(11) **EP 4 250 040 B1**
(45) Date of publication and mention of the grant of the patent: **18.09.2024**
(21) Application number: 23152041.2
(22) Date of filing: 17.01.2023
(51) Int. Cl.: G05D 1/225, G05D 1/227, G05D 1/617, G05D 105/22, G05D 107/13, G05D 109/10

(54) **DRIVING CONTROL APPARATUS FOR VEHICLE**
ANTRIEBSSTEUERUNGSVORRICHTUNG FÜR EIN FAHRZEUG
APPAREIL DE COMMANDE DE CONDUITE POUR VÉHICULE

(30) Priority: 22.03.2022 JP 2022045600
(43) Date of publication of application: 27.09.2023
(73) Proprietor: Suzuki Motor Corporation, Hamamatsu-shi, Shizuoka 432-8611 (JP)
(72) Inventor: SATO, Katsuhiko, Hamamatsu-shi, Shizuoka, 432-8611 (JP)
(74) Representative: Haseltine Lake Kempner LLP

(56) References cited:
- US-A1- 2017 090 480
- US-A1- 2020 269 839
- US-A1- 2020 307 633

## Description

### [Technical Field]

The present invention relates to a driving control apparatus for a vehicle, and more particularly, relates to a risk mitigation function for a vehicle being driven automatically by remote monitoring and control.

### [Background Art]

The development of technology for driverless vehicle driving under specific conditions by an automated operation device of the remote monitoring and control type is progressing. A remote-type automated driving system is configured to monitor, at a remote-control base station, the driving of a vehicle by an automated operation device provided with an inter-vehicle distance control system (ACCS) and a continuous automated steering system, for example, and to take control of the vehicle if necessary. In such a remote-type automated driving system, in the case of conditions in which the continuation of remote monitoring and control has become difficult for some reason while a vehicle is being driven by the automated operation device, it is necessary to respond with a risk mitigation function (RMF) of the automated operation device installed in the vehicle.

For example, Patent Literature 1 discloses, in a case in which an abnormality has occurred in a vehicle during automated driving, searching for a refuge location and calculating a guide path to the refuge location, and controlling the vehicle by automated steering to travel along the guide path. A space in which the vehicle can be parked, such as vacant site or the parking lot of a commercial facility, for example, is set as a refuge location.

Patent Literature 2 discloses in a vehicle control system, a control unit is configured to execute a stop process by which the vehicle is parked in a prescribed stop area when it is detected that the control unit or the driver has become incapable of properly maintaining a traveling state of the vehicle, and, in the stop process, the control unit extracts a plurality of available stop areas according to information from at least one of an external environment recognition device and a map device, and selects a stop area from the available stop areas by taking into account a possibility of the driver resuming driving the vehicle after the stop process has been initiated according to a result of monitoring the driver by an occupant monitoring device.

### [Citation List]

### [Patent Literature]

[Patent Literature 1] JP 2019-152963 A
[Patent Literature 2] US 2020/307633 A1

### [Summary of Invention]

### [Problem to be Solved by the Invention]

However, the case of the RMF being activated in the vicinity of an intersection carries the risk of disturbing the traffic flow or contact or collision with others in traffic while guiding the vehicle to the refuge location, such as by encountering others in traffic at the intersection.

The present invention has been devised in light of circumstances as above, and an object thereof is to lower the risk of disturbance of traffic flow or contact or collision with others in traffic at an intersection when the risk mitigation function is activated.

### [Means for Solving the Problem]

The invention is defined by the appended independent claim. Some optional features are defined in the dependent claims.

### [Advantageous Effect of Invention]

A driving control apparatus for a vehicle according to the present invention can lower the risk of disturbing the traffic flow or contact or collision with others in traffic at an intersection when the risk mitigation function is activated in the vicinity of the intersection.

### [Brief Description of Drawings]

[Figure 1] Figure 1 is a schematic diagram illustrating a driving control system for a vehicle in a first embodiment of the present invention.
[Figure 2] Figure 2 is a schematic plan view illustrating an external sensor group of a vehicle.
[Figure 3] Figure 3 is a block diagram illustrating a driving control system for a vehicle.
[Figure 4] Figures 4(a) and 4(b) are diagrams explaining the relationship between a stopping location of a vehicle and others in traffic around an intersection.
[Figure 5] Figure 5 is a diagram explaining the selection of a target stopping location at a crossroads.
[Figure 6] Figure 6 is a diagram conceptually explaining risk occurrence conditions due to override when the RMF is active.
[Figure 7] Figure 7 is a diagram explaining the effect of a change of an override threshold value when the RMF is active.
[Figure 8] Figures 8(a) to 8(d) are diagrams explaining the relationship between travel path changing and the override threshold value when the RMF is active.
[Figure 9] Figure 9 is a flowchart explaining the flow of RMF activation according to the first embodiment.
[Figure 10] Figure 10 is a schematic diagram illustrating a driving control system for a vehicle in a second embodiment of the present invention.
[Figure 11] Figure 11 is a diagram explaining the selection of a target stopping location at a crossroads.

### [Modes for Carrying Out the Invention]

### First embodiment

Hereinafter, a first embodiment of the present invention will be described in detail by referring to the drawings. A driving control system for a vehicle 1 according to the first embodiment is configured to be capable of executing automated driving corresponding to the Society of Automotive Engineers (SAE) Level 4, in which all driving operations in the operational design domain (ODD) are performed. Also, the driving control system for the vehicle 1 is a remote-type automated driving system capable of automated driving by remote monitoring and control, and taxis, rental cars, and other service cars that provide unmanned automated transportation services are anticipated as the vehicle 1.

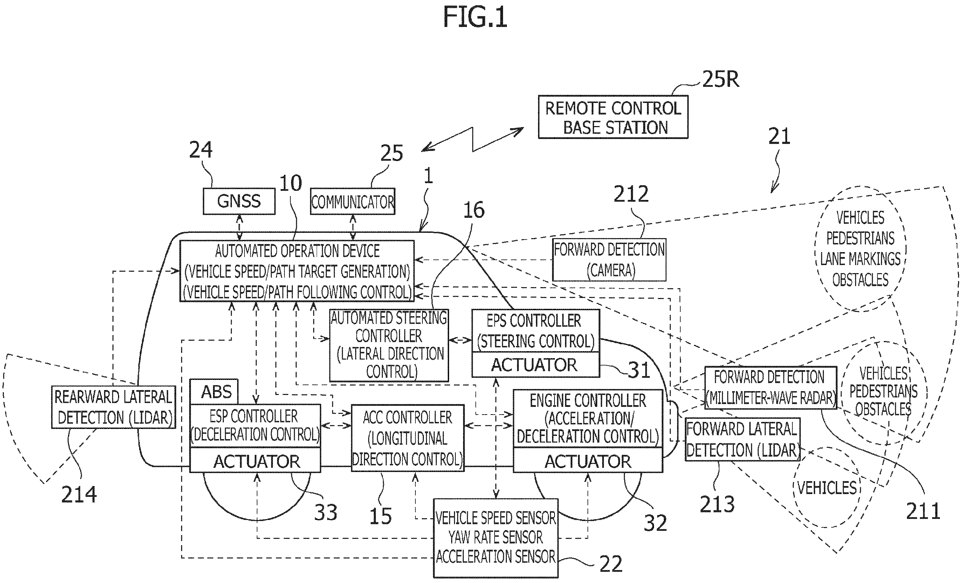

In Figures 1 to 3, the vehicle 1 provided with the driving control system according to the first embodiment is provided with, in addition to typical automobile components such as an engine and a vehicle body, an external sensor 21 that detects the vehicle-surrounding environment, an internal sensor 22 that detects vehicle information, a map information database 23, positioning means 24, a controller and actuator group for speed control and steering control, an ACC controller 15 for inter-vehicle distance control, an automated steering controller 16 for automated steering control, and an automated operation device 10 for unifying the above to execute path following control, so that recognition, determination, and control conventionally performed by the driver are performed by the vehicle. The vehicle 1 is further provided with a communicator 25 for communicating remote control commands, vehicle information and vehicle location information, and the like with a remote-control base station 25R.

The controller and actuator group for speed control and steering control includes an electronic power steering (EPS) controller 31 for steering control, an engine controller 32 for acceleration and deceleration control, and an ESP/ABS controller 33. An ESP (Electronic Stability Program, registered trademark) includes an anti-lock braking system (ABS) to form a stability control system (vehicle behavior stabilization control system).

The external sensor 21 is composed of a plurality of detection means for inputting lane markings on a road defining the vehicle's own driving lane and neighboring lanes, and the presence of, and relative distances from, other vehicles, obstacles, people, and the like around the vehicle into the automated operation device 10 as external data such as image data or point cloud data.

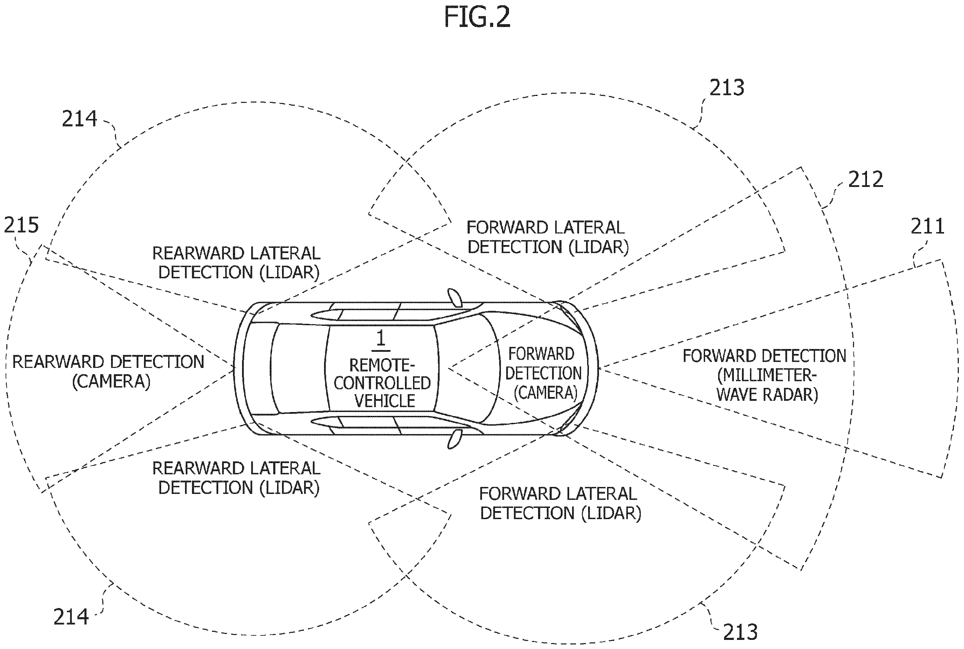

For example, as illustrated in Figure 2, the vehicle 1 is provided with a millimeter wave radar (211) and a camera (212) as front detection means 211 and 212, LIDARs (Laser Imaging Detection And Ranging) as front lateral detection means 213 and rear lateral detection means 214, and a camera (back camera) as rear detection means 215. The external sensor 21 covers 360 degrees around the vehicle, and can detect the positions of, and distances from, other vehicles, obstacles, and the like, and lane marking positions of the vehicle's own driving lane and the neighboring lanes, within a predetermined range in each of the front, rear, left, and right directions of the vehicle. Note that a millimeter wave radar (or LIDAR) can be also added as the rear detection means.

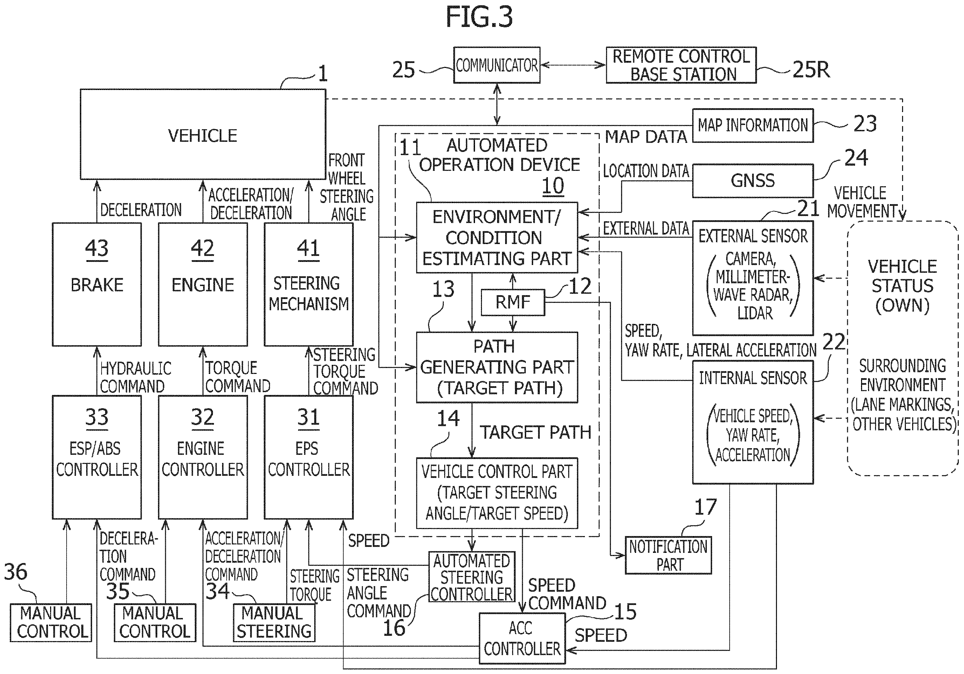

The internal sensor 22 is composed of a plurality of detection means, such as a vehicle speed sensor, a yaw rate sensor, and an acceleration sensor, for measuring physical quantities representing the state of movement of the vehicle. As illustrated in Figure 3, each of the measurement values from the internal sensor 22 is input into the automated operation device 10, the ACC controller 15, the automated steering controller 16, and the EPS controller 31, and is computationally processed together with input from the external sensor 21.

The automated operation device 10 includes the environmental condition estimating part 11, a risk mitigation function (RMF) part 12, a path generating part 13, and a vehicle control part 14, and is formed by a computer for implementing functions like those described hereinafter, that is, by ROM storing programs and data, a CPU that performs computational processing, RAM for reading out the programs and data and storing dynamic data and computational processing results, an input-output interface, and the like.

The environmental condition estimating part 11 acquires the absolute location of the vehicle by matching the vehicle location information according to the positioning means 24 such as a global navigation satellite system (GNSS) with map information in the map information database 23, and on the basis of external data such as image data and point cloud data acquired by the external sensor 21, estimates the positions of lane markings of the vehicle's own driving lane and the neighboring lanes, and the positions and speeds of other vehicles. In addition, it acquires the state of movement of the vehicle from internal data measured by the internal sensor 22.

In the case in which road conditions and environmental conditions are outside the operational design domain (ODD), or in the case in which the system does not operate normally, the RMF part 12 determines, on the basis of information input from the environmental condition estimating part 11, whether to activate the risk mitigation function (RMF) for safely stopping the vehicle 1 inside a stopping area designated as a target. In the present embodiment, the RMF is configured to be activated in the case of conditions in which the continuation of remote monitoring and control of the driving control system by the remote-control base station 25R through the communicator 25 has become difficult.

Before the RMF is activated and while the RMF is active, a notification is issued to passengers or occupants of the vehicle 1 and road users outside the vehicle by a notification part 17. Also, in the case in which the direction of travel of the vehicle 1 changes due to the activation of the RMF as described later, a notification indicating that the direction of travel will change may also be issued by the notification part 17. Note that the notification part 17 may also be configured to notify the inside and outside of the vehicle that automated driving by remote monitoring and control has stopped. Methods of notification by the notification part 17 include visual methods such as turning on a lamp and displaying text, and/or auditory methods such as outputting sound or speech.

The path generating part 13 is configured to generate a target path to a final destination from the vehicle location estimated by the environmental condition estimating part 11. The path generating part 13 performs a route search from a place of departure to a destination on the basis of vehicle location information and map information, and generates a general target path, also referred to as a global path. Furthermore, the path generating part 13 generates a detailed target path for automated driving such as lane keeping driving, lane changing, and travel path changing, also referred to as a local path, on the basis of the lane marking positions of the neighboring lanes, the positions and speeds of other vehicles, and the state of movement of the vehicle estimated by the environmental condition estimating part 11. The path generating part 13 is further configured to also generate a target path for RMF activation to a target stopping location in cases in which the vehicle 1 is to be stopped by the activation of the RMF.

The vehicle control part 14 calculates a target vehicle speed and a target steering angle on the basis of the target path generated by the path generating part 13, transmits a speed command for constant-speed driving or inter-vehicle distance maintenance or following driving to the ACC controller 15, and transmits a steering angle command for path following to the EPS controller 31 via the automated steering controller 16.

Note that the vehicle speed is also input into the EPS controller 31 and the ACC controller 15. Since the steering reaction force varies depending on the vehicle speed, the EPS controller 31 references a steering angle-steering torque map according to vehicle speed and transmits a torque command to a steering mechanism 41. By controlling an engine 42, a brake 43, and the steering mechanism 41 with the engine controller 32, the ESP/ABS controller 33, and the EPS controller 31, the movement of the vehicle 1 in the longitudinal direction and the lateral direction is controlled.

### Overview of remote-type automated driving system

Next, an overview of the remote-type automated driving system will be described. The automated driving system in the present embodiment is an automated driving system of the remote monitoring and control method, in which the driving of the vehicle 1 by the automated driving system is monitored by the remote-control base station 25R and controlled from the remote-control base station 25R if necessary.

The automated driving system is a system combining an inter-vehicle distance control system (ACCS: Adaptive Cruise Control System) and continuous automated steering system that continuously and automatically performs lane keeping and lane changing. The automated driving system is executable in a state in which the automated operation device 10 is active together with the ACC controller 15 forming the inter-vehicle distance control system (ACCS) and the automated steering controller 16 forming the continuous automated steering system.

Before the departure of the vehicle 1, an operator of the remote-control base station 25R sets a place of departure and a destination. The set place of departure and destination are input from the remote-control base station 25R into the automated operation device 10 of the vehicle 1 through the communicator 25. The path generating part 13 generates a global path from the place of departure to the destination on the basis of vehicle location information and map information obtained from the environmental condition estimating part 11. The path generating part 13 generates a local path and a target vehicle speed on the basis of external information (lanes, vehicle location, the positions and speeds of other vehicles traveling in the vehicle's own driving lane and the neighboring lanes, and the presence or absence of pedestrians and bicycles) acquired by the external sensor 21 on the basis of the generated global path and internal information (vehicle speed, yaw rate, acceleration) acquired by the internal sensor 22.

The operator of the remote-control base station 25R, upon determining that the environmental conditions, road conditions, and the like are maintained within the operational design domain (ODD), transmits a departure command to the automated operation device 10 causing the vehicle 1 to be driven in accordance with the generated target path and target vehicle speed.

The vehicle control part 14 estimates the speed, posture and lateral displacement of the vehicle Δt seconds later from the vehicle location and the movement characteristics of the vehicle, that is, the relationship between the yaw rate γ and the lateral acceleration (d²y/dt²) produced by vehicle movement according to the front wheel steering angle δ produced when steering torque T is imparted to the steering mechanism 41 while driving at the vehicle speed V. The vehicle control part 14 issues a steering angle command to the EPS controller 31 via the automated steering controller 16 such that the lateral displacement will be yt Δt seconds later, and issues a speed command to the ACC controller 15 such that a speed Vt will be obtained Δt seconds later.

The ACC controller 15, the automated steering controller 16, the EPS controller 31, the engine controller 32, and the ESP/ABS controller 33 operate independently and irrespectively of the automated steering, but are also operable according to command inputs from the automated driving controller 10 while the automated driving system is active.

The ESP/ABS controller 33 that has received a deceleration command from the ACC controller 15 controls the vehicle speed by outputting a hydraulic command to the actuator and controlling the braking force of the brake 43. Also, the engine controller 32 that has received an acceleration or deceleration command from the ACC controller 15 controls the vehicle speed by controlling the actuator output (throttle position) to thereby issue a torque command to the engine 42 and control the driving force.

The ACC system (ACCS) functions as a combination of hardware and software, such as a millimeter-wave radar serving as a front detection means 211 forming the external sensor 21, the ACC controller 15, the engine controller 32, and the ESP/ABS controller 33.

That is, in the case in which no vehicle is present ahead, constant-speed driving is performed with the ACC set speed (set speed) treated as the target vehicle speed. In the case of catching up to a vehicle ahead (the case in which the speed of the vehicle ahead is the ACC set speed or less), the vehicle follows the vehicle ahead to match the speed of the vehicle ahead while maintaining an inter-vehicle distance (set inter-vehicle distance) according to a set time gap (time headway = inter-vehicle distance/speed of the vehicle).

In the continuous automated steering system, the lane markings, vehicle location, and the positions and speeds of other vehicles traveling in the neighboring lanes are detected by the environmental condition estimating part 11 of the automated operation device 10 on the basis of image data and point cloud data acquired by the external sensor 21 and vehicle information acquired by the internal sensor 22. On the basis of this information, the continuous automated steering system performs a steering control by the EPS controller 31 through the automated steering controller 16 such that lane keeping control for driving in the center of a lane and lane changing control for crossing lane markings are executed.

That is, the EPS controller 31 that has received a steering angle command from the automated steering controller 16 references a map of vehicle speed-steering angle-steering torque to output a torque command to the actuator (EPS motor), and the steering mechanism 41 issues a front wheel steering angle designated as a target.

As described above, the automated driving system is a system configured by combining longitudinal control (speed control, inter-vehicle distance control) by the ACC controller 15 with lateral control (lane keeping control, lane changing control) by the automated steering controller 16. The automated driving system of the remote type monitors the driving of the vehicle 1 with the remote-control base station 25R and controls the driving of the vehicle 1 according to remote control commands from the remote-control base station 25R.

### Risk mitigation function (RMF) of automated driving system

While the automated driving system is active, the environmental condition estimating part 11 continuously monitors whether the driving status of the vehicle, the surrounding environmental conditions, and the like are maintained within the operational design domain (ODD) of the system, on the basis of external information acquired through the external sensor 21, vehicle information acquired by the internal sensor 22, communication conditions with the remote control base station 25R, and the like. In the case of being outside the ODD or the case in which the system does not operate normally, activation of the RMF for safely stopping the vehicle 1 inside a target stopping area is demanded.

In cases in which remote monitoring and control of the vehicle 1 by the remote-control base station 25R has become difficult, such as when communication with the remote-control base station 25R is disconnected or when the communicator 25 malfunctions, the RMF part 12 determines to activate the RMF on the basis of a signal from the environmental condition estimating part 11, and activates the RMF for guiding the vehicle 1 to stop in a target stopping area. Ordinarily, a space in which the vehicle 1 can stop on the target path of the automated driving is set as the target stopping area of the RMF. However, in the case in which the RMF is activated in the vicinity of an intersection, there is a possibility of encountering others in traffic (other traffic participants) or disturbing the traffic flow at the intersection while decelerating and guiding the vehicle 1 to the target stopping area on the target path.

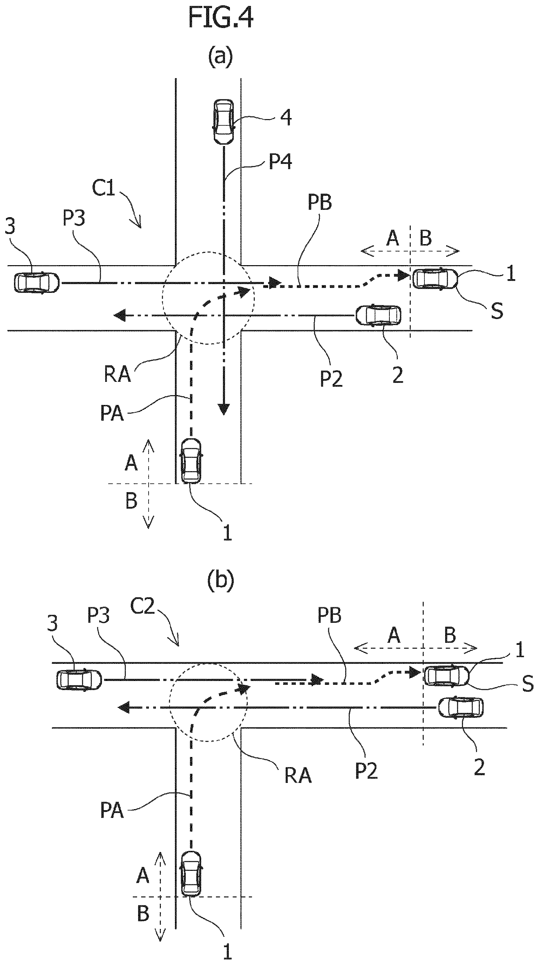

Reference will be made to Figures 4(a) and 4(b) to explain the relationship between a stopping location of the vehicle 1 and other traffic participants around an intersection. Figures 4(a) and 4(b) illustrate examples in which the RMF is activated in the vicinity of a crossroads intersection and a T-junction intersection, respectively, with no traffic signal. Note that traffic rules include left-hand traffic and right-hand traffic, but in the following description, left-hand traffic is described as an example.

In the example of a crossroads illustrated in Figure 4(a), the target path of the vehicle 1 is set to a path that makes a right turn at an intersection C1, as indicated by an arrow PA. In this example, around the intersection C1, in addition to the vehicle 1, there may be present a straight-through vehicle 2 on the right that enters the intersection C1 on a path of travel P2 from the right, a straight-through vehicle 3 on the left that enters the intersection C1 on a path of travel P3 from the left, and an oncoming straight-through vehicle 4 that enters the intersection C1 on a path of travel P4 from the oncoming lane. Here, in the case in which the continuation of communication between the vehicle 1 and the remote-control base station 25R has become difficult in the vicinity of the intersection C 1, the RMF part 12 determines that activation of the RMF is necessary.

In the case in which a target stopping location S is set on the target path after making a right turn at the intersection C 1, the vehicle 1, according to RMF activation of the automated operation device 10, makes a right turn along the path PA and is then guided along the path for RMF indicated by an arrow PB to stop at the target stopping location S. In this case, when the vehicle 1 makes a right turn at the intersection C1, there are risks of encountering the straight-through vehicle 2 on the right, the straight-through vehicle 3 on the left, and the oncoming straight-through vehicle 4. That is, by setting the target stopping area S on the target path of automated driving when the RMF is active, a plurality of encounter points at which there is a possibility of encountering other traffic participants are generated. With this, at the intersection C1, as illustrated in Figure 4(a), risks such as contact or collision with other traffic participants occur in a risk area RA.

In the example of a T-junction illustrated in Figure 4(b), the target path of the vehicle 1 is set to a path that makes a right turn at an intersection C2, as indicated by an arrow PA. Around the intersection C2, in addition to the vehicle 1, there may be present a straight-through vehicle 2 on the right that enters the intersection C2 on a path of travel P2 from the right and a straight-through vehicle 3 on the left that enters the intersection C2 on a path of travel P3 from the left. Here, in the case in which the continuation of communication between the vehicle 1 and the remote-control base station 25R has become difficult in the vicinity of the intersection C2, the RMF part 12 determines that activation of the RMF is necessary.

In the case in which a target stopping area S is set on the target path after making a right turn at the intersection C2, the vehicle 1, according to RMF activation of the automated operation device 10, makes a right turn along the path PA and is then guided along the path for RMF indicated by an arrow PB to stop at the target stopping location S. In this case, when the vehicle 1 makes a right turn at the intersection C2, there are risks of encountering the straight-through vehicle 2 on the right and the straight-through vehicle 3 on the left. That is, by setting the target stopping location S on the target path when the RMF is active, a plurality of encounter points at which there is a possibility of encountering other traffic participants are generated, and as illustrated in Figure 4(b), at the intersection C2, risks such as contact/collision with other traffic participants occur in a risk area RA.

In this way, in the case in which the RMF is activated in the vicinity of an intersection, when the vehicle 1 makes a right turn at the intersection, encounter points with the straight-through vehicle 2 on the right, the straight-through vehicle 3 on the left, and/or the oncoming straight-through vehicle 4 are generated. At such encounter points, risks such as contact or collision between the vehicle 1 and other traffic participants occur. Also, if the stopping location of the vehicle 1 according to the RMF is set to an area immediately before or immediately after the intersection, there is a possibility of disturbing the traffic flow of other traffic participants.

Accordingly, in the first embodiment, in the case in which the RMF is activated in the vicinity of an intersection, the target stopping location for RMF is set to an area at which risks such as contact or collision between the vehicle 1 and other traffic participants can be reduced, and furthermore, the influence on the traffic flow of other traffic participants can be moderated.

Here, the case in which the RMF is activated in the vicinity of an intersection means a situation in which, for example, if the RMF is activated to decelerate and stop the vehicle 1, the vehicle 1 is made to stop at or near the intersection, and as a result, the risk of disturbing the traffic flow or contact or collision with other traffic participants at the intersection or the like may occur. For example, the case of being in a stage (a point in space or a point in time) at which the vehicle 1 cannot be brought to a stop in front of a no-stop area near an intersection described later, even if decelerated by a prescribed deceleration by the activation of the RMF, the RMF is determined to be activated in the vicinity of the intersection. That is, the vicinity of an intersection can be defined to be a predetermined area in front of an intersection in which, if the RMF is activated to decelerated the vehicle 1 by a prescribed deceleration (for example, 4.0 m/s²), the vehicle 1 would come to a stop inside a no-stop area.

Note that even if in the so-called "vicinity of an intersection", the case in which the vehicle 1 is already traveling in a dedicated left or right-turn lane to follow a target path of automated driving, the case in which automated steering by automated driving is already occurring, and the like may be excluded from the activation of the RMF in the vicinity of an intersection described below. This is because changing the path for RMF in the situation in which preparations for making a left or right turn are already being made may inadvertently increase risk.

Hereinafter, the setting of the target stopping location for RMF in the first embodiment will be described.

### Setting of target stopping location for RMF

In the first embodiment, the target stopping location for RMF is set according to the following basic principles.

### (1) Reduce encounter points with other traffic participants

Encounter points with other traffic participants are reduced by setting a plurality of target stopping location candidates.

### (2) Reduce influence on traffic flow of other traffic participants

The influence on traffic flow of other traffic participants is reduced by setting a no-stop area in a prescribed area near an intersection and including the intersection.

### (3) Determine target stopping location through comparison of risk factors

The target stopping location is determined by comparing risk factors of the plurality of target stopping location candidates.

Hereinafter, the setting of the target stopping location for RMF will be described in detail.

### (1) Reduce encounter points with other traffic participants

The automated operation device 10 is configured to to acquire the vehicle location with the environmental condition estimating part 11 by matching vehicle location information according to the positioning means 24 with map information in the map information database 23, and to search for a plurality of target stopping location candidates with the RMF part 12 in the case of RMF activation on the basis of the vehicle location and map information about the surroundings, continuously during automated driving.

In the case in which the RMF is activated in the vicinity of the crossroads intersection, the direction of travel of a target path PA may be the straight-through direction, the left-turn direction, or the right-turn direction of the intersection. As for the target stopping location candidates for RMF, locations on paths different from the global path set by the automated operation device 10 may be set in consideration of reducing encounter points with other traffic participants.

Accordingly, the RMF part 12 sets a plurality of target stopping location candidates in areas that can be reached by only a path going straight through the intersection or a path making a left turn, and a target stopping location candidate is not set on a path making a right turn at the intersection.

### (2) Reduce influence on traffic flow of other traffic participants

At and near the intersection, a no-stop zone (no-stop area) A to be excluded from the search for target stopping location candidates is provided. If the vehicle 1 is brought to a stop in, immediately before, or immediately after the intersection by RMF activation, there is a possibility of impeding the traffic flow of other traffic participants. Accordingly, by providing a no-stop zone A, the influence on the traffic flow of other traffic participants is reduced. Since target stopping location candidates are not set in the no-stop zone A, the no-stop zone A may also be seen as a range to be excluded from the setting of the target stopping location.

An appropriate range is set for a no-stop zone A such that the influence on the traffic flow of other traffic participants at the intersection is reduced. For example, an area on the inner side of the intersection edges, an area inside the stop lines for an intersection with stop lines, an area within a certain distance (for example, 6 meters) from the intersection edges for an intersection with no stop lines or pedestrian crossings, an area inside pedestrian crossings for an intersection with no stop lines but with pedestrian crossings, or a no-parking/stopping zone can be set as the no-stop zone A at the intersection and near the intersection.

Note that a no-travel direction to be excluded from the search for target stopping location candidates is not set ahead in the direction of travel. That is, at a crossroads intersection, it is also possible to set a target stopping location for RMF in the right-turn direction, that is, a direction of travel in which the vehicle 100 needs to cut across the oncoming lane.

### (3) Determine target stopping location through comparison of risk factors

Next, the determination of the target stopping location through a comparison of risk factors of the plurality of target stopping location candidates will be described.

The RMF part 12 sets a plurality of target stopping location candidates with consideration for reducing encounter points and reducing influence on traffic flow, as described in (1) and (2) above. For each of the plurality of target stopping location candidates that have been set, the RMF part 12 calculates a risk factor RF expressing how high a risk is for the vehicle 1 to reach the target stopping location candidate from the current location. The risk factor RF is a larger value for a higher risk.

Specifically, the risk factor RF is calculated as the total (Rf1 + Rf2 + Rf3) of points Rf1 related to the number of encounter points between the vehicle 1 and other traffic participants at and near the intersection, points Rf2 related to a predicted travel distance from the current location of the vehicle 1 to each target stopping location candidate, and points Rf3 related to a predicted travel time from the current location of the vehicle 1 to each target stopping location candidate.

The points Rf1 related to the number of encounter points are calculated on the basis of the number of encounter points with other traffic participants on a path from the current location of the vehicle 1 to the target stopping location candidate, based on the point of view that the risk of contact or collision increases with respect to a greater number of encounter points between the vehicle 1 and other traffic participants. For example, 10 points at a time are added for each increase of one encounter point, so that there are 10 points in the case of one encounter point, 20 points in the case of two encounter points... and 50 points in the case of five encounter points.

The number of encounter points can be ascertained on the basis of map information and external information acquired by the external sensor 21, for example. In the present embodiment, in the case in which the path of the vehicle 1 cuts across a driving lane, the number of encounter points are counted by determining that there is a possibility of encountering other vehicles, regardless of the presence or absence of actual vehicles. Also, in the case in which the path of the vehicle 1 cuts across a pedestrian crossing, the number of encounter points are counted by determining that there is a possibility of encountering pedestrians, regardless of the presence or absence pedestrians. That is, a maximum number of encounter points are counted on the basis of the path of the vehicle 1 and the road conditions acquired from the vehicle location information according to the GNSS or other positioning means 24 and map information in the map information database 23.

The points Rf2 related to predicted travel distance are calculated on the basis of a predicted travel distance from the current location of the vehicle 1 to the target stopping location candidate, based on the point of view that the risk of contact or collision increases with respect to a longer distance until the vehicle 1 stops. For example, 0.5 points are added every time the predicted travel distance increases by 10 meters, so that there are 0.5 points in the case in which the predicted travel distance is 10 meters, 1 point in the case of 20 meters ... and 2.5 points in the case of 50 meters. The predicted travel distance can be estimated on the basis of the vehicle location and map information about the surroundings, for example.

The points Rf3 related to predicted travel time are calculated on the basis of a predicted travel time from the current location of the vehicle 1 to the target stopping location candidate, based on the point of view that the risk of contact or collision increase with respect to a longer time until the vehicle 1 stops. For example, 1 point is added every time the predicted travel time increases by 10 seconds, so that there is 1 point in the case in which the predicted travel time is 10 seconds, 2 points in the case of 20 seconds ... and 5 points in the case of 50 seconds. The predicted travel time, although not limited to the following, is calculated by assuming that the RMF is activated while the vehicle 1 is traveling at a vehicle speed of 40 km/h, so that the vehicle is decelerated to 10 km/h at deceleration of 4.0 m/s², travels at a constant speed, and then is decelerated gradually (for example, at deceleration of 1.96 m/s²) immediately before reaching the target stopping location candidate, so as to stop at the target stopping location candidate, for example.

Note that the specific values of the points Rf1 related to the number of encounter points, the points Rf2 related to the predicted travel distance, and the points Rf3 related to the predicted travel time described above are examples, and the use of values other than the above is obviously possible. However, it is preferable to apply a weighting such that the weights increase in the order of the points Rf1 related to the number of encounter points, the points Rf3 related to the predicted travel time, and the points Rf2 related to the predicted travel distance. This is in consideration of the risk being higher when there is a greater number of encounter points at which there is a possibility of encountering other traffic participants, furthermore, the risk being thought to increase more with respect to a longer travel time until stopping at the target stopping location than the case of a longer travel distance, and so on.

Also, in the case in which the risk factors of a plurality of target stopping location candidates have the same value, the target stopping location S is selected such that the direction of travel to the target stopping location candidate is preferentially in the order of the direction going straight through the intersection, the direction in which the vehicle 1 turns at the intersection without cutting across the oncoming lane, and the direction in which the vehicle 1 turns at the intersection by cutting across the oncoming lane.

The RMF part 12 compares the risk factors RF calculated for the plurality of target stopping location candidates, and selects the target stopping location candidate with the smallest risk factor RF as the target stopping location S.

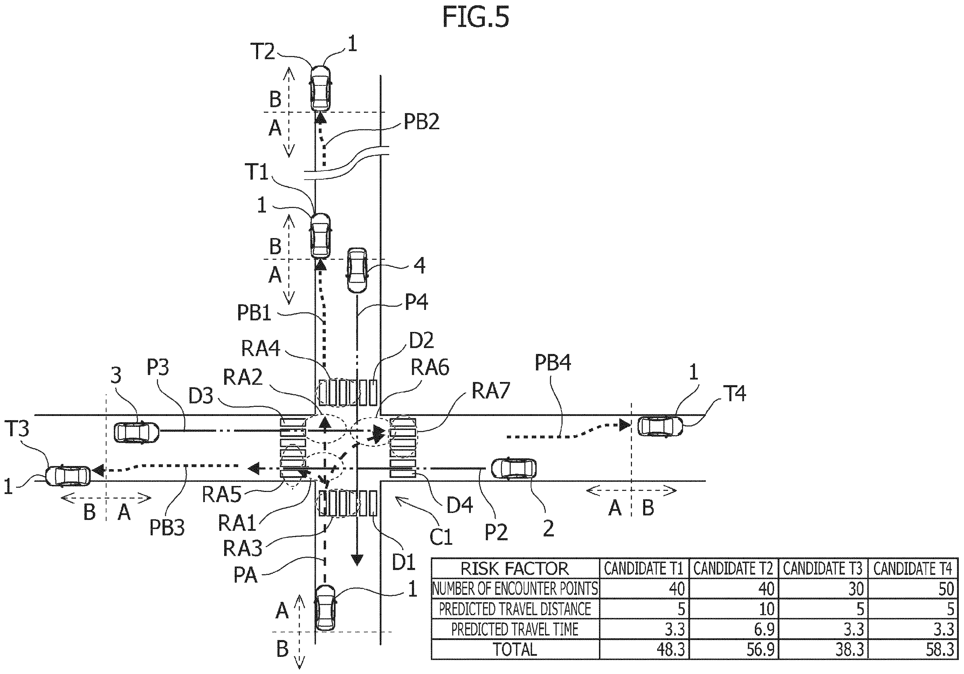

Reference will be made to Figure 5 to describe an example of selecting the target stopping location S at an intersection C1 which is a crossroads with no traffic signal. In the example illustrated in Figure 5, around the intersection C1, in addition to the vehicle 1 in front of the intersection C1, there may be present a straight-through vehicle 2 on the right, a straight-through vehicle 3 on the left, and an oncoming straight-through vehicle 4. Pedestrian crossings are provided on the road going straight through the intersection C1 and the intersecting road as seen from the vehicle 1, and there may be present a pedestrian attempting to cross a pedestrian crossing D1 in front of the intersection, a pedestrian attempting to cross a pedestrian crossing D2 on the far side of the intersection, a pedestrian attempting to cross a pedestrian crossing D3 on the left-turn side, and a pedestrian attempting to cross a pedestrian crossing D4 on the right-turn side. A target path PA planned by the automated operation device 10 of the vehicle 1 is a path PA that goes straight through, makes a left turn, or makes a right turn at the intersection C1.

As illustrated in Figure 5, the RMF part 12 sets a target stopping location candidate T1 in a stoppable zone B on a path going straight through the intersection C1 and sets a target stopping location candidate T2 in a stoppable zone B farther ahead of the target stopping location candidate T1. Also, a target stopping location candidate T3 is set in a stoppable zone B on a path making a left turn at the intersection C1 and a target stopping location candidate T4 is set in a stoppable zone B on a path making a right turn at the intersection C1.

For the target stopping location candidate T1, the number of encounter points is four, that is, an encounter point with the straight-through vehicle 2 on the right in a risk area RA1, an encounter point with the straight-through vehicle 3 on the left in a risk area RA2, an encounter point with the pedestrian attempting to cross the pedestrian crossing D1 in a risk area RA3, and an encounter point with the pedestrian attempting to cross the pedestrian crossing D2 in a risk area RA4. Consequently, the points related to the number of encounter points are Rf1 = 40. Assuming that the predicted travel distance is 100 meters and the predicted travel time is 33 seconds from the current location of the vehicle 1 to the target stopping location candidate T1, the points related to the predicted travel distance are Rf2 = 5 and the points related to the predicted travel time are Rf3 = 3.3. In this case, the risk factor RF of the target stopping location candidate T1 is 48.3 (= Rf1 + Rf2 + Rf3).

For the target stopping location candidate T2, similarly to the target stopping location candidate T1, the number of encounter points are four, that is, the encounter point with the straight-through vehicle 2 on the right, the encounter point with the straight-through vehicle 3 on the left, and the encounter points with the pedestrians attempting to cross the pedestrian crossings D1 and D2, respectively. Consequently, the points related to the number of encounter points are Rf1 = 40. Assuming that the predicted travel distance is 200 meters and the predicted travel time is 69 seconds from the current location of the vehicle 1 to the target stopping location candidate T2, the points related to the predicted travel distance are Rf2 = 10 and the points related to the predicted travel time are Rf3 = 6.9. In this case, the risk factor RF of the target stopping location candidate T2 is 56.9 (= Rf1 + Rf2 + Rf3).

For the target stopping location candidate T3, the number of encounter points is three, that is, an encounter point with the straight-through vehicle 2 on the right in the risk area RA1, an encounter point with a pedestrian attempting to cross the pedestrian crossing D1 in the risk area RA3, and an encounter point with the pedestrian attempting to cross the pedestrian crossing D3 in a risk area RA5, and the points related to the number of encounter points are Rf1 = 30. Assuming that the predicted travel distance is 100 meters and the predicted travel time is 33 seconds from the current location of the vehicle 1 to the target stopping location candidate T3, the points related to the predicted travel distance are Rf2 = 5 and the points related to the predicted travel time are Rf3 = 3.3. In this case, the risk factor RF of the target stopping location candidate T3 is 38.3 (= Rf1 + Rf2 + Rf3).

For the target stopping location candidate T4, the number of encounter points is five, that is, an encounter point with the straight-through vehicle 2 on the right in the risk area RA1, encounter points with the straight-through vehicle 3 on the left and the oncoming straight-through vehicle 4 in a risk area RA6, an encounter point with the pedestrian attempting to cross the pedestrian crossing D1 in the risk area RA3, and an encounter point with the pedestrian attempting to cross the pedestrian crossing D4 in a risk area RA7, and the points related to the number of encounter points are Rf1 = 50. Assuming that the predicted travel distance is 100 meters and the predicted travel time is 33 seconds from the current location of the vehicle 1 to the target stopping location candidate T4, the points related to the predicted travel distance are Rf2 = 5 and the points related to the predicted travel time are Rf3 = 3.3. In this case, the risk factor RF of the target stopping location candidate T4 is 58.3 (= Rf1 + Rf2 + Rf3).

The RMF part 12 compares the risk factors RF calculated for each of the plurality of target stopping location candidates T1 to T4 and selects the target stopping location candidate T3 on the left-turn path with the smallest risk factor RF as the target stopping location S.

### Override function of automated driving system

The driving control system of the vehicle 1 has an override function that stops automated driving by the automated operation device 10 and switches to a manual driving mode in response to a control intervention by an occupant or passenger of the vehicle 1. That is, in the case in which a steering override by a steering intervention by an occupant or passenger is executed during automated driving by the automated operation device 10, the automated steering control described above is stopped and switched to the manual driving mode, enabling manual steering 34 (see Figure 3). Also, in the case in which an acceleration override by an acceleration control intervention or a deceleration override by a deceleration control intervention by an occupant or passenger is executed during automated driving by the automated operation device 10, the acceleration and deceleration control described above is stopped and switched to the manual driving mode, enabling manual acceleration and deceleration control 35, 36 (see Figure 3). The manual steering control 34 and the manual acceleration and deceleration control 35, 36 can be arranged to be detected by the internal sensor 22, for example.

Such an override function is also executable while the RMF is active as a general rule. However, in the case in which the target stopping location located on a path different from the global path to the destination has been set due to the activation of the RMF in the vicinity of an intersection, there is a possibility that risks may occur due to a panicked occupant or passenger performing the steering override or the acceleration or deceleration override.

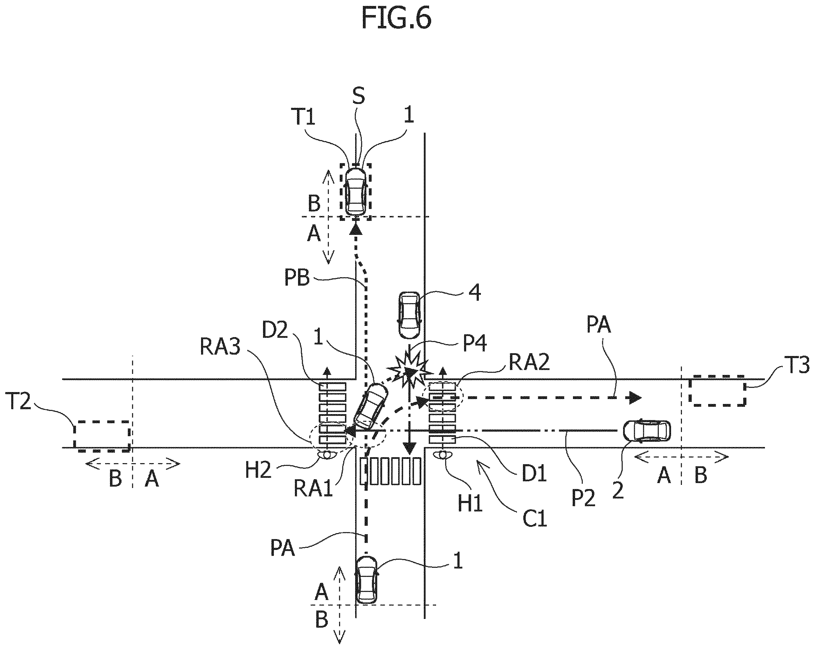

Reference will be made to Figure 6 to describe risk occurrence conditions due to override when the RMF is activated in the vicinity of an intersection. In the example illustrated in Figure 6, around an intersection C1 which is a crossroads with no traffic signal, in addition to the vehicle 1 in front of the intersection C1, a straight-through vehicle 2 on the right and an oncoming straight-through vehicle 4 are present. Pedestrian crossings are provided on the road going straight through the intersection C1 and the intersecting road as seen from the vehicle 1, and there are a pedestrian H1 attempting to cross a pedestrian crossing D1 on the right-turn side and a pedestrian H2 attempting to cross a pedestrian crossing D2 on the left-turn side. A target path PA planned by the automated operation device 10 of the vehicle 1 is a path that makes a right turn at the intersection C1.

The RMF part 12 sets a target stopping location candidate T1 on a path going straight through the intersection C1, a target stopping location candidate T2 on a path making a left turn, and a target stopping location candidate T3 on a path making a right turn. For the target stopping location candidate T1 on the path going straight through, an encounter point with the straight-through vehicle 2 on the right in a risk area RA1 is generated. For the target stopping location candidate T2 on the path making a left turn, an encounter point with the straight-through vehicle 2 on the right in the risk area RA1 and an encounter point with a pedestrian H2 in a risk area RA3 are generated. Also, for the target stopping location candidate T3 on the path making a right turn, an encounter point with the straight-through vehicle 2 on the right in the risk area RA1, an encounter point with the oncoming straight-through vehicle 4, and an encounter point with the pedestrian H1 in a risk area RA2 are generated.

The RMF part 12 calculates the risk factor RF for each of the plurality of target stopping location candidates T1 to T3 and selects the target stopping location candidate T1 on the straight-through path with the smallest risk factor RF as the target stopping location S. In this case, since the target stopping location S is located on a straight-through path PB different from the right-turn path that is the target path PA of automated driving, if the RMF is activated in the vicinity of the intersection, the vehicle 1 will go straight through the intersection C1 without making a right turn. Such behavior of the vehicle 1 is different from what is anticipated by an occupant or passenger, and thus there is a possibility that a panicked occupant or passenger may perform an inappropriate steering control intervention or acceleration or deceleration control intervention.

In the case in which the direction of travel is displaced from the target path PB in the straight-through direction for RMF to the right-turn direction due to an inappropriate override while the RMF is active, the risk of contact or collision with the oncoming straight-through vehicle 4 occurs. In this way, if travel path changing is performed at an intersection by a steering override while the RMF is active, there is a risk of disturbing the traffic flow and inducing contact or collision with other traffic participants. Moreover, in the case in which acceleration or deceleration is performed at an intersection by an acceleration or deceleration override while the RMF is active, there is likewise a risk of disturbing the traffic flow and inducing contact or collision with other traffic participants.

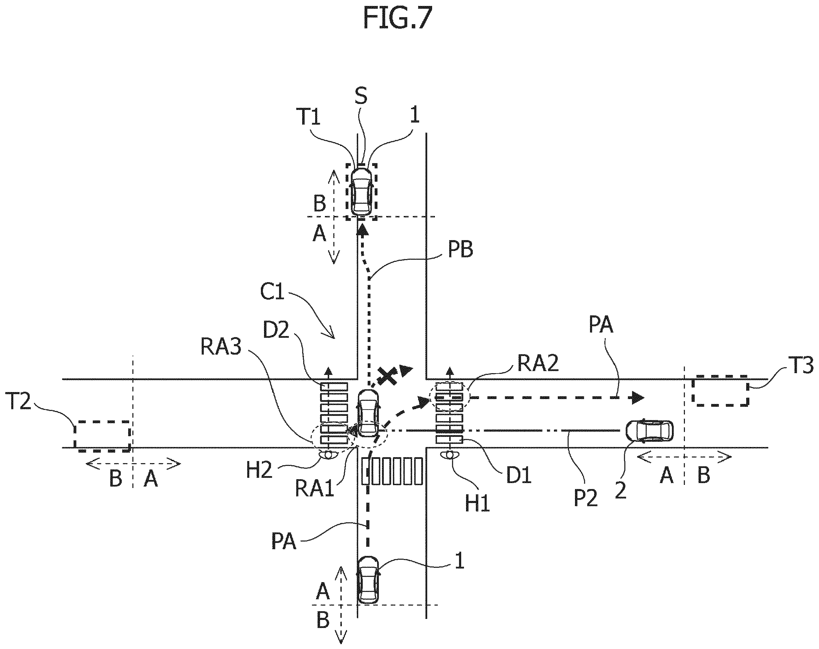

Accordingly, in the first embodiment, when the RMF is active in the vicinity of an intersection, an override threshold value serving as a determination reference for a control intervention by an occupant or passenger is changed to a larger value than the override threshold value when the RMF is inactive. With this, even if an occupant or passenger performs a steering control intervention or an acceleration or deceleration control intervention while the RMF is active, an override is executed less readily. As a result, as illustrated in Figure 7, even if an occupant or passenger performs a steering control intervention or an acceleration or deceleration control intervention while the RMF is active, the vehicle 1 can be guided to stop at the target stopping location S in the straight-through direction, without the direction of travel departing from the target path PB for RMF. Since travel path changing and acceleration or deceleration changing are not performed at the intersection, the risk of disturbing the traffic flow or contact or collision with other traffic participants can be reduced.

### Setting of override threshold values when RMF is active

As described above, when the RMF is active in the vicinity of an intersection, an override threshold value serving as a determination reference for a control intervention by an occupant or passenger is set to a larger value than the override threshold value when the RMF is inactive (or during normal operation). With regard to an acceleration or deceleration control intervention, an acceleration override threshold value OEr when the RMF is active is set to a larger value than an acceleration override threshold value OEd when the RMF is inactive (OEd < OEr), and a deceleration override threshold value OPr when the RMF is active is set to a larger value than a deceleration override threshold value OPd when the RMF is inactive (OPd < OPr).

With regard to a steering control intervention, a right steering override threshold value OTrr and a left steering override threshold value OTrl when the RMF is active are respectively set to larger values than a right steering override threshold value OTdr and a left steering override threshold value OTdl when the RMF is inactive (OTdr = OTdl < OTrr, OTdr = OTdl < OTrl). Furthermore, the magnitude relationship between the right steering override threshold value OTrr and the left steering override threshold value OTrl when the RMF is active is set according to the pattern of travel path changing due to RMF activation.

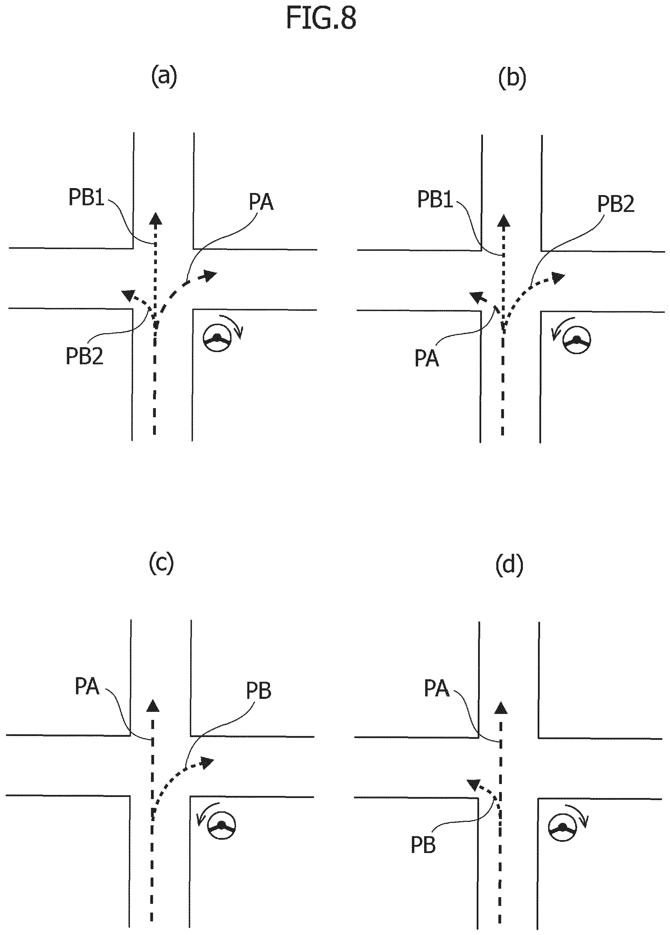

Hereinafter, reference will be made to Figures 8(a) to 8(d) to describe the setting of the steering override threshold values according to the travel path changing pattern when the RMF is active.

As illustrated in Figure 8(a), in the case in which the target path PA of automated driving is in the right-turn direction but the target path for RMF is a path PB1 in the straight-through direction or a path PB2 in the left-turn direction, suppose that a steering control intervention in the right direction is performed so as to follow the target path PA. In such a case, to avoid an override due to the sudden right steering by an occupant or passenger, the right steering override threshold value OTrr when the RMF is active is set to a larger value than the left steering override threshold value OTrl (OTrl < OTrr).

As illustrated in Figure 8(b), in the case in which the target path PA of automated driving is in the left-turn direction but the target path for RMF is a path PB 1 in the straight-through direction or a path PB2 in the right-turn direction, suppose that a steering control intervention in the left direction is performed so as to follow the target path PA. In such a case, to avoid an override due to the sudden left steering by an occupant or passenger, the left steering override threshold value OTrl when the RMF is active is set to a larger value than the right steering override threshold value OTrr (OTrr < OTrl).

As illustrated in Figure 8(c), in the case in which the target path PA of automated driving is in the straight-through direction but the target path for RMF is a path PB in the right-turn direction, suppose that a steering control intervention in the left direction is performed so as to follow the target path PA. In such a case, to avoid an override due to the sudden left steering by an occupant or passenger, the left steering override threshold value OTrl when the RMF is active is set to a larger value than the right steering override threshold value OTrr (OTrr < OTrl).

As illustrated in Figure 8(d), in the case in which the target path PA of automated driving is in the straight-through direction but the target path for RMF is a path PB in the left-turn direction, suppose that a steering control intervention in the right direction is performed so as to follow the target path PA. In such a case, to avoid an override due to the sudden right steering by an occupant or passenger, the right steering override threshold value OTrr when the RMF is active is set to a larger value than the left steering override threshold value OTrl (OTrl < OTrr).

### RMF activation flow during automated driving

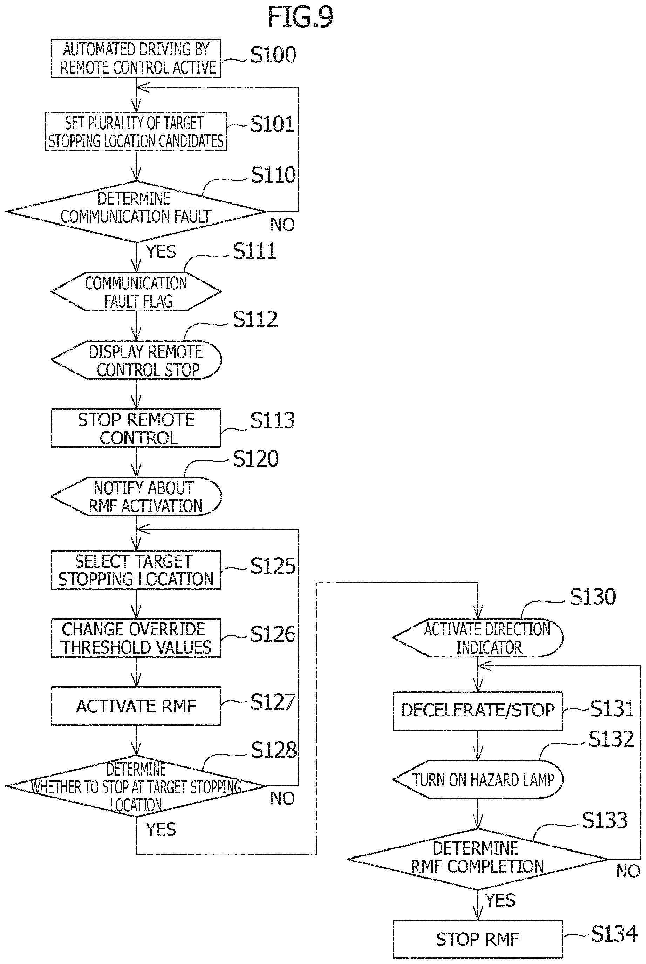

Next, the flow of RMF activation in conditions under which remote monitoring and control during automated driving has become difficult will be described. Figure 9 illustrates a flowchart explaining the flow of RMF activation according to the first embodiment.

### (1) Automated driving by remote monitoring and control activation (step S100)

Automated driving by the automated operation device 10 is performed according to a departure command from the operator of the remote-control base station 25R. The automated operation device 10 performs driving control of the vehicle 1 in accordance with a generated target path and a target vehicle speed.

### (2) Setting of plurality of target stopping location candidates (step S101)

The RMF part 12 performs a search for target stopping location candidates on the basis of vehicle location information from the positioning means 24 and map information in the map information database 23, and sets a plurality of target stopping location candidates partway along the global path to the destination in preparation for RMF activation. During automated driving, the RMF part 12 sets a plurality of target stopping location candidates continuously (for example, at prescribed intervals) and not only in the vicinity of an intersection. The plurality of target stopping location candidates are updated continuously so that the most recent target stopping location candidates based on the current location of the vehicle 1 are set.

### (3) Communication fault determination (step S110)

While the automated operation device 10 by remote monitoring and control is active, the RMF part 12 continuously (for example, at prescribed intervals) determines whether or not communication with the remote-control base station 25R via the communicator 25 is being performed normally and the continuation of automated driving is possible. If conditions are determined in which the continuation of remote monitoring and control of automated driving by the automated operation device 10 has become difficult due to a communication fault, such as a malfunction in the communicator 25 or an interruption in communication with the remote-control base station 25R, the flow proceeds to step S111 for activating the RMF. On the other hand, in the case in which a communication fault has not occurred and the continuation of remote monitoring and control is possible, the flow returns to step S101 and continues automated driving.

### (4) Stopping of remote monitoring and control (steps S111 to S113)

When it is determined that the continuation of remote monitoring and control has become difficult, a communication fault occurrence flag is raised (step S111), and at the same time, the notification part 17 notifies the inside and outside of the vehicle about the stopping of the activation (automated driving) of the automated operation device 10 by remote monitoring and control (step S 112), and the activation of the automated operation device 10 by remote monitoring and control is stopped.

### (5) RMF activation notification (step S120)

The passengers or occupants of the vehicle 1 are notified by the notification part 17 that the RMF is to be activated because of conditions in which the continuation of remote monitoring and control has become difficult. The outside of the vehicle may also be notified by the notification part 17.

### (6) Target stopping location selection (step S125)

A target stopping location S is selected from among the plurality of target stopping location candidates. The RMF part 12 calculates the risk factor RF as described above for each of the plurality of target stopping location candidates set in step S101, and selects the target stopping location candidate with the lowest risk factor RF as the target stopping location S. The path generating part 13 generates a target path for RMF activation to the selected target stopping location S on the basis of vehicle location information, map information, lane marking positions of the neighboring lanes, the positions and speeds of other vehicles, the state of movement of the vehicle, and the like acquired by the environmental condition estimating part 11.

In the case in which the target path for RMF activation is different from the target path of automated driving, the notification part 17 also notifies the passengers or occupants of the vehicle 1 that the path will be changed by RMF activation.

### (7) Override threshold value changing (step S126)

The normal right steering override threshold value OTdr and the normal left steering override threshold value OTdl are respectively changed to the right steering override threshold value OTrr and the left steering override threshold value OTrl when the RMF is active according to the pattern of travel path changing due to RMF activation. Note that in the case in which travel path is not changed due to RMF activation, a steering control intervention by a panicked occupant or passenger is considered unlikely to occur. Therefore, the steering override threshold values are not changed, and the right steering override threshold value OTdr and the left steering override threshold value OTdl when the RMF is inactive (or during normal operation) are used as-is.

Also, the normal acceleration override threshold value OEd and the normal deceleration override threshold value OPd are respectively changed to the acceleration override threshold value OEr and the deceleration override threshold value OPr when the RMF is active.

### (8) RMF activation (step S127)

The activation of the RMF for safely stopping the vehicle 1 inside a target stopping area is started. The RMF is a function causing the vehicle 1 to drive autonomously so as to decelerate and stop at a target stopping location S in accordance with a target path for RMF activation.

### (9) Determination of whether to stop at target stopping location S (step S128)

The RMF part 12 detects the presence or absence of an obstacle around the target stopping location S on the basis of obstacle information around the target stopping location S provided from the external sensor 21 through the environmental condition estimating part 11, and determines whether the vehicle can stop at the target stopping location S. In the case in which there is no obstacle around the target stopping location S, the target stopping location is determined to be accessible for stopping and the flow proceeds to step S130.

On the other hand, for example, in the case in which another vehicle is present at the target stopping location S or construction is underway near the target stopping location S, it is determined that the vehicle 1 cannot stop at the target stopping location S due to an obstacle around the target stopping location S. In this case, the flow returns to step S125 to select a new target stopping location S.

### (10) Deceleration and stopping by RMF (steps S130 to S132)

The automated operation device 10 activates a direction indicator (not illustrated) in the direction of the target stopping location S (step S130). The vehicle control part 14 performs speed control and steering control to drive the vehicle 1 so as to decelerate in accordance with the target path for RMF activation, and to stop at the target stopping location S (step S131). The automated operation device 10 causes hazard lamps (not illustrated) to blink (step S132).

### (11) RMF completion determination (steps S133 and S134)

The RMF part 12 matches the location at which the vehicle 1 has stopped with the target stopping location S on the basis of vehicle location information and map information, and determines whether the two are in agreement. If they are not in agreement, the flow returns to step S131 to drive to the target stopping location S. In the case in which the stopped location of the vehicle 1 and the target stopping location S are in agreement, RMF completion is determined, and the flow proceeds to step S134 to terminate the RMF. With this, the sequence of RMF processes ends.

In the driving control apparatus of the vehicle 1 according to the first embodiment described above, the following operational effects can be achieved.

The driving control apparatus of the vehicle 1 provided with the automated operation device 10 for executing automated driving by remote monitoring and control has a risk mitigation function (RMF) that executes risk mitigation control for stopping the vehicle 1 at a target stopping location in the case of conditions in which the continuation of remote monitoring and control has become difficult, and an override function that stops automated driving by the automated operation device 10 and switches to a manual driving mode in response to a control intervention by an occupant or passenger of the vehicle 1. The automated operation device 10 is configured to execute a search for a plurality of target stopping location candidates on the basis of location information about the vehicle 1 and map information during automated driving in preparation for the RMF activation, and in the case in which a target stopping location candidate located on a path different from the target path PA of automated driving is selected as the target stopping location S from among the plurality of target stopping location candidates when the RMF is activated in the vicinity of an intersection, to change an override threshold value serving as a determination reference for a control intervention by an occupant or passenger to a larger value than an override threshold value when the RMF is inactive.

By changing the override threshold value serving as a determination reference for a control intervention to a larger value than the override threshold value when the RMF is inactive in the case in which remote monitoring and control of the automated operation device 10 is difficult due to a communication fault so that the RMF is activated in the vicinity of an intersection, an override by a panicked occupant or passenger due to the activation of the RMF can be prevented.

The override threshold value includes steering override threshold values serving as a determination reference for a steering control intervention. The steering override threshold values OTrr, OTrl when the RMF is active in the vicinity of an intersection are set such that a steering override threshold value for steering in a direction turning along the target path at the intersection is greater than a steering override threshold value for steering in the opposite direction to the direction turning along the target path at the intersection. With this, in the case in which the vehicle 1 travels in a direction different from the initial destination of automated driving due to the activation of the RMF, the risk of disturbing the traffic flow or contact or collision with other traffic participants caused by a steering override by a panicked occupant or passenger can be mitigated.

The override threshold value includes an acceleration override threshold value serving as a determination reference for an acceleration control intervention, and when the RMF is activated, in the case in which the steering override threshold values OTdr, OTdl when the RMF is inactive are changed to the steering override threshold values OTrr, OTrl when the RMF is active, the acceleration override threshold value is set to the larger value OEr than the acceleration override threshold value OEd when the RMF is inactive. By increasing the acceleration override threshold value in association with changing the steering override threshold values, a sudden acceleration override by a panicked occupant or passenger can be prevented, and the vehicle 1 can be made to reach the target stopping location with increased driving safety when the RMF is active.

The override threshold value includes a deceleration override threshold value serving as a determination reference for a deceleration control intervention, and when the RMF is activated, in the case in which the steering override threshold values OTdr, OTdl when the RMF is inactive are changed to the steering override threshold values OTrr, OTrl when the RMF is active, the deceleration override threshold value is set to the larger value OPr than the deceleration override threshold value OPd when the RMF is inactive. By increasing the deceleration override threshold value in association with changing the steering override threshold values, a sudden deceleration override by a panicked occupant or passenger can be prevented, and the vehicle 1 can be made to reach the target stopping location with increased driving safety when the RMF is active.

The acceleration override threshold value OEr when the RMF is active is set to a larger value than the deceleration override threshold value OPr when the RMF is active. If an acceleration override by a panicked occupant or passenger occurs, there is a possibility of a sudden acceleration under conditions of turning at an intersection. Accordingly, by setting the acceleration override threshold value OEr to a larger value than the deceleration override threshold value OPr, an acceleration override occurs less readily, and the vehicle 1 can be made to reach the target stopping location with increased driving safety when the RMF is active.

### Modification of first embodiment

In the first embodiment described above, when the RMF is active in the vicinity of an intersection, an override threshold value serving as a determination reference for a control intervention by an occupant or passenger is set to a larger value than the override threshold value when the RMF is inactive (or during normal operation). In addition, the override threshold value when the RMF is active may also be set to different values before steering is performed and after steering is performed through the RMF at the intersection.

Hereinafter, a specific setting method will be described. The steering override threshold values OTrr, OTrl when the RMF is active include first RMF steering override threshold values OTrr1, OTrl1 and second RMF steering override threshold values OTrr2, OTrl2 larger than the first RMF steering override threshold values OTrr1, OTrl1 (OTrr1 < OTrr2, OTrl1 < OTrl2). The acceleration override threshold value OEr when the RMF is active includes a first RMF acceleration override threshold value OEr1 and a second RMF acceleration override threshold value OEr2 larger than the first RMF acceleration override threshold value OEr1 (OEr1 < OEr2). The deceleration override threshold value OPr when the RMF is active includes a first RMF deceleration override threshold value OPr1 and a second RMF deceleration override threshold value OPr2 larger than the first RMF deceleration override threshold value OPr1 (OPr1 < OPr2).

From when the RMF is activated in the vicinity of an intersection up to before steering is performed at the intersection through the RMF, the first RMF steering override threshold values OTrr1, OTrl1, the first RMF acceleration override threshold value OEr1, and the first RMF deceleration override threshold value OPr1 are set. After steering is performed at the intersection through the RMF, the first RMF steering override threshold values OTrr1, OTrl1, the first RMF acceleration override threshold value OEr1, and the first RMF deceleration override threshold value OPr1 are changed to the second RMF steering override threshold values OTrr2, OTrl2, the second RMF acceleration override threshold value OEr2, and the second RMF deceleration override threshold value OPr2.

After steering is performed through RMF activation, by setting the steering override threshold values, the acceleration override threshold value, and the deceleration override threshold value to large values (OTrr2, OTrl2, OEr2, OPr2), an override due to a control intervention by a panicked occupant or passenger is prevented. On the other hand, before steering is performed for changing the direction of travel at an intersection when the RMF is active (for example, at a location in front of the intersection edge), the steering override threshold values, the acceleration override threshold value, and the deceleration override threshold value are set to smaller values (OTrr1, OTrl1, OEr1, OPr1). With this, when it is confirmed that the time required to reach the target stopping location will increase because of congestion or the like, a refuge operation is enabled according to the judgment of an administrator riding in a driver's seat of the vehicle 1. Note that the administrator normally is not involved with driving operations of the vehicle 1 and rides only to deal with emergencies, and it is anticipated that the refuge operation will cause the vehicle 1 to take refuge in a parking lot or the like of an immediately adjacent facility.

### Second embodiment

Hereinafter, a second embodiment of the present invention will be described by referring to the drawings. The basic configuration of the automated control system according to the second embodiment is similar to the first embodiment described above. Hereinafter, the differences from the first embodiment will be described mainly. In the second embodiment, the target stopping location S for RMF is determined on the basis of real-time information about the vehicle surroundings acquired through V2X communication technology and the like.

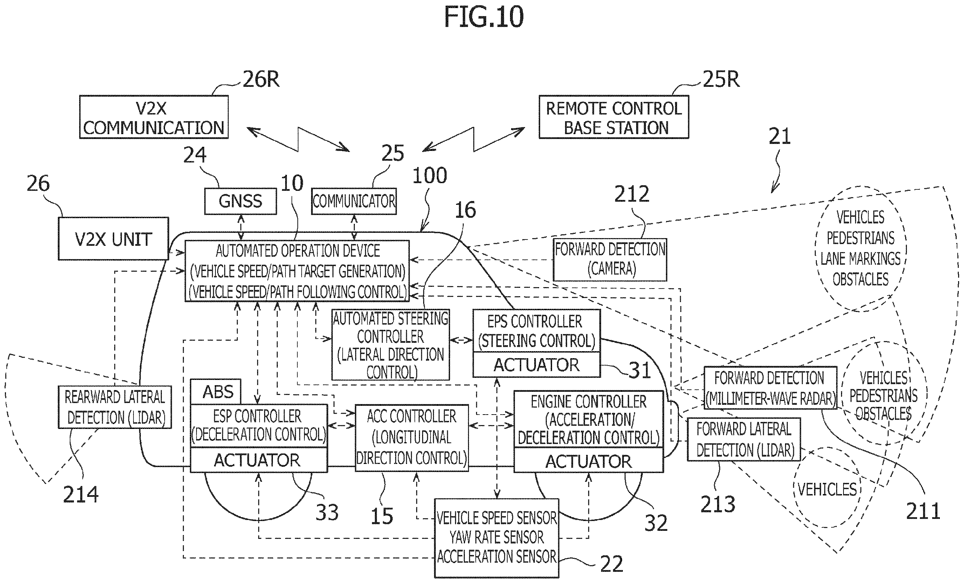

Figure 10 schematically illustrates a driving control system of a vehicle 100 according to the second embodiment. The driving control system of the vehicle 100 in the second embodiment further includes a V2X unit 26 that receives sensing information about the vehicle surroundings by V2X communication 26R.

V2X (Vehicle to Everything) is a wireless communication technology for connecting a vehicle to everything, and collectively refers to communication between vehicles (V2V: Vehicle to Vehicle), communication between a vehicle and roadside infrastructure (V2I: Vehicle to Infrastructure), communication between a vehicle and pedestrians (V2P: Vehicle to Pedestrian), and communication between a vehicle and a network (V2N: Vehicle to Network).

The V2X unit 26 is configured to receive other vehicle information from other vehicles by V2V, receive traffic information (such as congestion information and information about road construction, for example) from a roadside unit by V2I, detect the presence or absence of pedestrians or bicycles carrying a smartphone by V2P, and receive map information or the like from an external server (not illustrated) by V2N. In the present embodiment, the V2X unit 26 is configured to acquire information regarding the presence or absence of others in traffic (other traffic participants, such as other vehicles, pedestrians, and bicycles) around an intersection in particular as the sensing information about the vehicle surroundings. The sensing information about the vehicle 100 surroundings received by the V2X unit 26 is input into the environmental condition estimating part 11.

The RMF part 12 determines the target stopping location for when the RMF is activated by accounting for real-time information regarding the presence or absence of other traffic participants around the intersection input from the V2X unit 26 through the environmental condition estimating part 11. Note that for a suburban intersection or the like with good visibility, information regarding the presence or absence of other traffic participants (such as other vehicles, pedestrians, and bicycles) around the intersection can also be acquired by image data from the camera (in-vehicle camera) 212 as sensing information about the vehicle surroundings.

In the second embodiment, real-time information related to the presence or absence of other traffic participants around the intersection acquired by the V2X unit 26 or the in-vehicle camera 212 is reflected in the calculation of the points Rf1 related to the number of encounter points. That is, from among a maximum number of risk areas based on the vehicle location information according to the GNSS or other positioning means 24 and the road structure acquired from the map information in the map information database 23, only risk areas in which the presence of other traffic participants is detected are counted as the number of encounter points. Here, for pedestrians near the intersection, whether or not there are pedestrians approaching the intersection, waiting at the intersection, or crossing a pedestrian crossing of the intersection is detected from sensing information. Pedestrians going away from the intersection, even if near the intersection, are determined to have no possibility of encountering the vehicle 100 and are not counted in the number of encounter points.

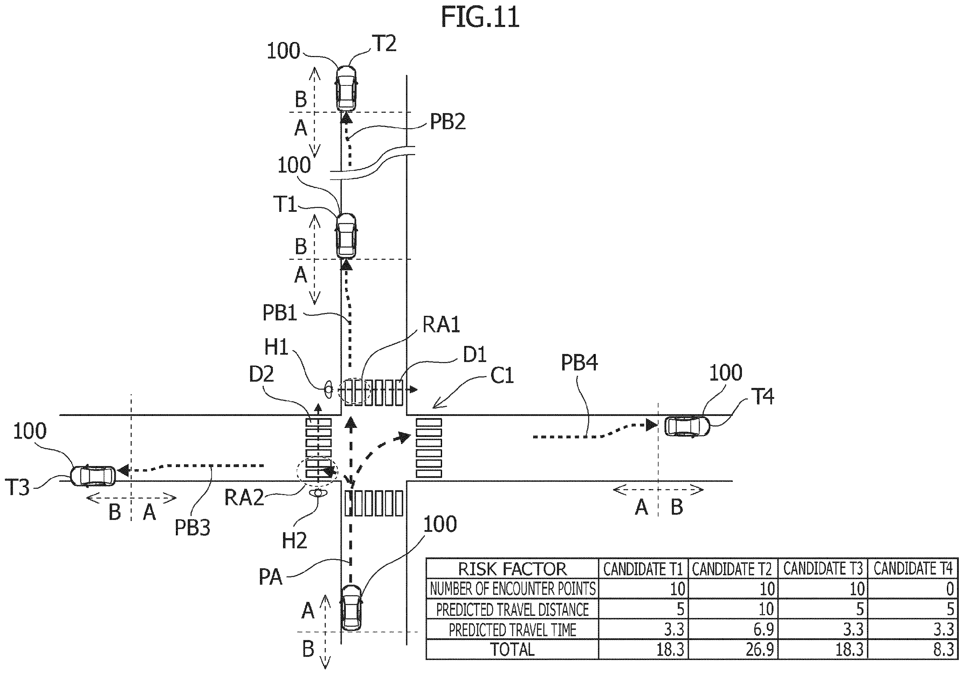

Reference will be made to Figure 11 to describe the selection of the target stopping location S for an intersection C1 which is a crossroads with no traffic signal. In the example illustrated in Figure 11, the vehicle 100 is present in front of the intersection C1, and pedestrian crossings are provided on the road going straight through the intersection C1 and the intersecting road as seen from the vehicle 100. According to sensing information from the V2X unit 26 and/or the in-vehicle camera 212, the non-existence of other vehicles attempting to enter the intersection C1 is detected around the intersection C1, and furthermore, the presence of a pedestrian H1 attempting to cross a pedestrian crossing D1 on the straight-through side and a pedestrian H2 attempting to cross a pedestrian crossing D2 on the left-turn side is detected. A target path PA planned by the automated operation device 10 of the vehicle 100 is a path PA that goes straight through, makes a left turn, or makes a right turn at the intersection C1.

As illustrated in Figure 11, the RMF part 12 sets a target stopping location candidate T1 in a stoppable zone B on a path going straight through the intersection C1 and sets a target stopping location candidate T2 in a stoppable zone B farther ahead of the target stopping location candidate T1. Also, a target stopping location candidate T3 is set in a stoppable zone B on a path making a left turn at the intersection C1 and a target stopping location candidate T4 is set in a stoppable zone B on a path making a right turn at the intersection C1.

For the target stopping location candidate T1, the number of encounter points is the one place of an encounter point with the pedestrian H1 on the far side of the intersection C1 in a risk area RA1. According to sensing information from the V2X unit 26 and/or the in-vehicle camera 212, no other vehicles attempting to enter the intersection C1 is detected around the intersection C1, and therefore there are zero encounter points with other vehicles. Consequently, the points related to the number of encounter points are Rf1 = 10. Assuming that the predicted travel distance is 100 meters and the predicted travel time is 33 seconds from the current location of the vehicle 100 to the target stopping location candidate T1, the points related to the predicted travel distance are Rf2 = 5 and the points related to the predicted travel time are Rf3 = 3.3. In this case, the risk factor RF of the target stopping location candidate T1 is 18.3 (= Rf1 + Rf2 + Rf3).

For the target stopping location candidate T2, similarly to the target stopping location candidate T1, the number of encounter points is one, that is, an encounter point with the pedestrian H1 on the far side of the intersection C1 in the risk area RA1. Consequently, the points related to the number of encounter points are Rf1 = 10. Assuming that the predicted travel distance is 200 meters and the predicted travel time is 69 seconds from the current location of the vehicle 100 to the target stopping location candidate T2, the points related to the predicted travel distance are Rf2 = 10 and the points related to the predicted travel time are Rf3 = 6.9. In this case, the risk factor RF of the target stopping location candidate T2 is 26.9 (= Rf1 + Rf2 + Rf3).

For the target stopping location candidate T3, the number of encounter points is one, that is, an encounter point with the pedestrian H2 on the left-turn side in a risk area RA2, and the points related to the number of encounter points are Rf1 = 10. Assuming that the predicted travel distance is 100 meters and the predicted travel time is 33 seconds from the current location of the vehicle 1 to the target stopping location candidate T3, the points related to the predicted travel distance are Rf2 = 5 and the points related to the predicted travel time are Rf3 = 3.3. In this case, the risk factor RF of the target stopping location candidate T3 is 18.3 (= Rf1 + Rf2 + Rf3).

For the target stopping location candidate T4, in the case in which sensing information from the V2X unit 26 and/or the in-vehicle camera 212 is not accounted for, the maximum number of encounter points is five places. Specifically, there may be an encounter point with the straight-through vehicle 2 on the right, an encounter point with the straight-through vehicle 3 on the left, an encounter point with the oncoming straight-through vehicle 4, an encounter point with the pedestrian crossing the pedestrian crossing in front of the intersection C1, and an encounter point with the pedestrian crossing the pedestrian crossing on the right-turn side.

However, in the example illustrated in Figure 11, according to sensing information from the V2X unit 26 and/or the in-vehicle camera 212, no other traffic participants is detected in the right-turn direction, and therefore there are zero encounter points. Consequently, the points related to the number of encounter points are calculated to be Rf1 = 0.

Assuming that the predicted travel distance is 100 meters and the predicted travel time is 33 seconds from the current location of the vehicle 100 to the target stopping location candidate T4, the points related to the predicted travel distance are Rf2 = 5 and the points related to the predicted travel time are Rf3 = 3.3. In this case, the risk factor RF of the target stopping location candidate T4 is 8.3 (= Rf1 + Rf2 + Rf3).

The RMF part 12 compares the risk factors RF calculated for each of the plurality of target stopping location candidates T1 to T4 and selects the target stopping location candidate T4 on the right-turn path with the smallest risk factor RF as the target stopping location S.

In the case of conditions in which remote monitoring and control during automated driving has become difficult, the automated operation device 10 activates the RMF according to the flowchart in Figure 9, similarly to the first embodiment described above, and performs automated driving of the vehicle 100 to stop at the target stopping location S. Note that when the RMF is active, the override threshold values for the RMF being inactive (during normal operation) are changed to the override threshold values for the RMF being active, similarly to the first embodiment described above.

As described above, since the search for a plurality of target stopping location candidates is executed in advance during automated driving, when the activation of the RMF is started, the target stopping location S can be selected rapidly. In the case in which the RMF is activated in the vicinity of an intersection, the presence or absence of pedestrians near the intersection can be ascertained in real time and reflected in the number of encounter points on the basis of sensing information acquired by the V2X communication 26, 26R in cities and urban areas, and sensing information acquired by the in-vehicle camera 212 at suburban intersections or the like with good visibility. With this, the target stopping location candidate with the least number of encounter points with pedestrians can be selected as the target stopping location S, and the risk of inducing a disturbance in the traffic flow or contact or collision with other traffic participants can be minimized.

Also, pedestrians approaching the intersection, waiting at the intersection, or crossing a pedestrian crossing of the intersection are detected by the V2X communication 26, 26R and/or the in-vehicle camera 212. By not counting pedestrians going away from the intersection in the number of encounter points, the number of encounter points at which there is a possibility of encountering a pedestrian can be determined accurately.

In addition to the presence or absence of pedestrians at the intersection, information about other vehicles approaching the intersection is acquired by the V2X communication 26, 26R and/or the in-vehicle camera 212, and on the basis of the detection information about pedestrians and the information about other vehicles, the target stopping location candidate with the least number of encounter points between the vehicle 100 and pedestrians and other vehicles and at which the vehicle 100 can stop is configured to be selected from among the plurality of target stopping location candidates as the target stopping location S. By acquiring in real time information about not only pedestrians in the vicinity of the intersection but also other vehicles approaching the intersection, risk of inducing a disturbance in the traffic flow or contact or collision with other traffic participants can be suppressed further.

After the target stopping location is selected, surrounding information about the target stopping location S continues to be acquired by the V2X communication 26, 26R and/or the in-vehicle camera 212, and in the case in which an obstacle being present on the path to the target stopping location S is detected, a target stopping location candidate located on a different path is arranged to be selected as a new target stopping location S. In the case in which there is an obstacle on the path, such as due to congestion, waiting at a railroad crossing on the path to the target stopping location S or the presence of another vehicle at the target stopping location, the time required to reach the target stopping location S is inferred to increase. In such cases, switching to a target stopping location S on a different path makes it possible to reach and stop at the target stopping location S rapidly.

### Modifications

(1) In the embodiments described above, in the case in which the RMF is activated in the vicinity of an intersection, the override threshold values are changed such that an override by a control intervention by an occupant or passenger occurs less readily. However, it is not limited to when the RMF is activated in the vicinity of an intersection and may also be configured such that the override threshold values are changed similarly to the embodiments described above in conditions that necessitate lane changing or travel path changing by the activation of the RMF. Also, in the embodiments described above, the case in which the intersection is a crossroads is described as an example, but the present invention can also be applied similarly to cases in which the intersection is a T-junction or a five-way intersection.
(2) In the embodiments described above, a plurality of target stopping location candidates are searched for continuously in case the RMF is activated, and the target stopping location S is selected from among the plurality of target stopping location candidates. Situations in which there is an obstacle around the target stopping location S so that the location is not accessible for stopping are anticipated, and therefore, a greater number of target stopping location candidates is preferable. From the point of view of the processing load on the RMF part 12, the number of target stopping location candidates may be arranged to be at least two places, and in the case in which the vehicle cannot stop at the selected target stopping location S, target stopping location candidates located on the same path may be arranged to be added.
(3) In the embodiments described above, the determination of the target stopping location S in the case in which the RMF is activated in the vicinity of an intersection is described. However, the determination method for the target stopping location S according to the embodiments described above is not limited to the vicinity of an intersection and can also be applied to conditions that necessitate lane changing or travel path changing by the activation of the RMF, such as roadways with many lanes.
(4) In the embodiment described above, the risk factor RF is calculated as the total of the points Rf1 related to the number of encounter points, the points Rf2 related to the predicted travel distance, and the points Rf3 related to the predicted travel time. However, the risk factor RF is not limited thereto and may also be calculated using at least one of the points Rf1 related to the number of encounter points, the points Rf2 related to the predicted travel distance, and the points Rf3 related to the predicted travel time. Moreover, the risk factor RF may also be arranged to be calculated on the basis of a factor other than the number of encounter points, the predicted travel distance, and the predicted travel time.
(5) In the embodiment described above, left-hand traffic is described as an example of the traffic rules, but the present embodiment is also applicable to the case of right-hand traffic. In the case of right-hand traffic, the direction of making a right turn at an intersection is the direction of turning without cutting across the oncoming lane, and the direction of making a left turn at an intersection is the direction of turning by cutting across the oncoming lane.
(6) In the embodiments described above, a no-stop zone A (no-stop area) A in which a target stopping location is not set is provided at and near the intersection. In addition, a no-travel direction in which a target stopping location is not set ahead in the direction of travel may also be set at the intersection. For example, a direction of travel in which the vehicle 1 needs to cut across the oncoming lane can be set as the no-travel direction. Specifically, at three-way intersection (T-junction) and a four-way intersection (crossroads), the right-turn direction may be set as the no-travel direction, and at a five-way intersection, the right-turn direction and a right-turn direction or left-turn direction for which the intersection angle exceeds 90 degrees may be set as no-travel directions. Since a target stopping location is not set in the no-travel direction, the no-travel direction may also be seen as a direction of travel to be excluded from the search for target stopping location candidates.
(7) In the second embodiment described above, information related to the presence or absence of pedestrians around an intersection is arranged to be acquired by utilizing sensing information from the V2X communication 26, 26R and the in-vehicle camera 212. In this case, it may be configured such that the number of pedestrians is also detected in addition to the presence or absence of pedestrians, and in the case in which there are pedestrians, the points Rf1 related to the number of encounter points is calculated on the basis of the number of pedestrians. For example, the points Rf1 related to the number of encounter points can be set to a larger value for a greater number of pedestrians.
(8) In the second embodiment described above, the driving control system of the vehicle 100 is configured to utilize sensing information from both the V2X communication 26, 26R and the in-vehicle camera 212. However, it is not limited thereto and may also be configured to utilize sensing information from at least one of the V2X communication 26, 26R and the in-vehicle camera 212.

Although several embodiments of the present invention have been described above, it is noted that the present invention is not limited to the above embodiments, and various further modifications and alterations are possible within the scope of the claims.

### [Reference Signs List]

- 1, 100: Vehicle
- 10: Automated operation device11 Environmental condition estimating part
- 12: RMF part
- 13: Path generating part
- 14: Vehicle control part
- 15: ACC controller
- 16: Automated steering controller
- 17: Notification part
- 21: External sensor
- 22: Internal sensor
- 23: Map information database
- 24: Positioning means (GNSS)
- 25: Communicator
- 26: V2X unit
- 31: EPS controller
- 32: Engine controller
- 33: ESP/ABS controller
- 34: Manual steering (wheel)
- 35: Manual control (accelerator pedal)
- 36: Manual control (brake pedal)

## Claims

1. A driving control apparatus for a vehicle (1) provided with an automated operation device (10) for executing automated driving by remote monitoring and control, having:
a risk mitigation function (RMF) that executes risk mitigation control for stopping the vehicle (1) at a target stopping location (S) in a case of communication fault with a remote-control base station for remote monitoring and control; and
an override function that stops automated driving by the automated operation device (10) and switches to a manual driving mode in response to a control intervention by an occupant or passenger of the vehicle (1), **characterized in that**
the automated operation device (10) is configured:
to execute a search for a plurality of target stopping location candidates on the basis of location information about the vehicle (1) and map information during the automated driving in preparation for RMF activation; and
in a case in which a target stopping location candidate located on a path different from a target path of automated driving is selected, as the target stopping location (S), from among the plurality of target stopping location candidates when the RMF is activated in the vicinity of an intersection, to change an override threshold value serving as a determination reference for the control intervention by the occupant or passenger to activate the override function to a larger value than an override threshold value when the RMF is inactive.

2. The driving control apparatus for a vehicle (1) according to claim 1, wherein:
the override threshold value includes a steering override threshold value serving as a determination reference for a steering control intervention; and
the steering override threshold value (OTrr, OTrl) when the RMF is active in the vicinity of an intersection is set such that a steering override threshold value for steering in a direction turning along the target path at the intersection is greater than a steering override threshold value for steering in an opposite direction to the direction turning along the target path at the intersection.

3. The driving control apparatus for a vehicle (1) according to claim 2, wherein:
the override threshold value includes an acceleration override threshold value serving as a determination reference for an acceleration control intervention; and
when the RMF is activated, in a case in which the steering override threshold values (OTdr, OTdl) when the RMF is inactive are changed to the steering override threshold values (OTrr, OTrl) when the RMF is active, the acceleration override threshold value is set to a larger value (OEr) than the acceleration override threshold value (OEd) when the RMF is inactive.

4. The driving control apparatus for a vehicle (1) according to claim 3, wherein:
the override threshold value includes a deceleration override threshold value serving as a determination reference for a deceleration control intervention; and
when the RMF is activated, in a case in which the steering override threshold values (OTdr, OTdl) when the RMF is inactive are changed to the steering override threshold values (OTrr, OTrl) when the RMF is active, the deceleration override threshold value is set to a larger value (OPr) than the deceleration override threshold value (OPd) when the RMF is inactive.

5. The driving control apparatus for a vehicle (1) according to claim 4, wherein
the acceleration override threshold value (OEr) when the RMF is active is set to a larger value than the deceleration override threshold value (OPr) when the RMF is active.

6. The driving control apparatus for a vehicle (1) according to claim 5, wherein:
the steering override threshold value (OTrr, OTrl) when the RMF is active includes a first RMF steering override threshold value (OTrr1, OTrl1) and a second RMF steering override threshold value (OTrr2, OTrl2) larger than the first RMF steering override threshold value (OTrr1, OTrl1);
the acceleration override threshold value (OEr) when the RMF is active includes a first RMF acceleration override threshold value (OEr1) and a second RMF acceleration override threshold value (OEr2) larger than the first RMF acceleration override threshold value (OEr1);
the deceleration override threshold value (OPr) when the RMF is active includes a first RMF deceleration override threshold value (OPr1) and a second RMF deceleration override threshold value (OPr2) larger than the first RMF deceleration override threshold value (OPr1);
the driving control apparatus is configured to set the first RMF steering override threshold value (OTrr1, OTrl1), the first RMF acceleration override threshold value (OEr1), and the first RMF deceleration override threshold value (OPr1) from when the RMF is activated in the vicinity of an intersection up to before steering is performed at the intersection; and
after the steering is performed at the intersection, the first RMF steering override threshold value (OTrr1, OTrl1), the first RMF acceleration override threshold value (OEr1), and the first RMF deceleration override threshold value (OPr1) are changed to the second RMF steering override threshold value (OTrr2, OTrl2), the second RMF acceleration override threshold value (OEr2), and the second RMF deceleration override threshold value (OPr2).

## Patentansprüche

1. Fahrsteuerungsvorrichtung für ein Fahrzeug (1), das mit einer automatisierten Bedienungseinrichtung (10) zum Ausführen des automatisierten Fahrens durch Fernüberwachung und - steuerung ausgestattet ist, umfassend:
eine Risikominderungsfunktion (RMF), die eine Risikominderungssteuerung zum Anhalten des Fahrzeugs (1) an einem Zielanhalteort (S) in einem Fall eines Kommunikationsfehlers mit einer Fernsteuerungsbasisstation für Fernüberwachung und -steuerung ausführt; und
eine Übersteuerungsfunktion, die das automatisierte Fahren durch die automatisierte Bedienungseinrichtung (10) stoppt und als Reaktion auf einen Steuerungseingriff durch einen Benutzer oder Passagier des Fahrzeugs (1) in einen manuellen Fahrmodus umschaltet, **dadurch gekennzeichnet, dass**
die automatisierte Bedienungseinrichtung (10) so konfiguriert ist, dass
sie während des automatisierten Fahrens in Vorbereitung auf die RMF-Aktivierung eine Suche nach einer Vielzahl von Zielanhalteortkandidaten auf der Grundlage von Ortsinformationen über das Fahrzeug (1) und Karteninformationen durchführt; und dass
sie in einem Fall, in dem ein Zielanhalteortkandidat, der sich auf einem Weg befindet, der sich von einem Zielweg des automatisierten Fahrens unterscheidet, als der Zielanhalteort (S) aus der Vielzahl von Zielanhalteortkandidaten bei der Aktivierung der RMF in der Nähe einer Kreuzung ausgewählt wird, einen Übersteuerungsschwellenwert zur Aktivierung der Übersteuerungsfunktion, der als eine Bestimmungsreferenz für den Steuereingriff durch den Benutzer oder Passagier dient, zu einem größeren Wert als einen Übersteuerungsschwellenwert bei der Inaktivierung der RMF ändert.

2. Fahrsteuerungsvorrichtung für ein Fahrzeug (1) nach Anspruch 1, wobei
der Übersteuerungsschwellenwert einen Lenkübersteuerungsschwellenwert enthält, der als Bestimmungsreferenz für einen Lenksteuerungseingriff dient; und
der Lenkübersteuerungsschwellenwert (OTrr, OTrl) bei der Aktivierung der RMF in der Nähe einer Kreuzung so gesetzt wird, dass ein Lenkübersteuerungsschwellenwert für das Lenken in eine Richtung, die entlang des Zielweges an der Kreuzung abbiegt, größer ist als ein Lenkübersteuerungsschwellenwert für das Lenken in eine Richtung, die der Richtung, die entlang des Zielweges an der Kreuzung abbiegt, entgegengesetzt ist.

3. Fahrsteuerungsvorrichtung für ein Fahrzeug (1) nach Anspruch 2, wobei
der Übersteuerungsschwellenwert einen Beschleunigungsübersteuerungsschwellenwert enthält, der als Bestimmungsreferenz für einen Beschleunigungssteuerungseingriff dient; und
wenn die RMF aktiviert ist, in einem Fall, in dem die Lenkübersteuerungsschwellenwerte (OTdr, OTdl) bei der Inaktivierung der RMF zu den Lenkübersteuerungsschwellenwerten (OTrr, OTrl) bei der Aktivierung der RMF geändert werden, der Beschleunigungsübersteuerungsschwellenwert zu einem größeren Wert (OEr) als der Beschleunigungsübersteuerungsschwellenwert (OEd) bei der Inaktivierung der RMF gesetzt wird.

4. Fahrsteuerungsvorrichtung für ein Fahrzeug (1) nach Anspruch 3, wobei
der Übersteuerungsschwellenwert einen Verzögerungsübersteuerungsschwellenwert enthält, der als Bestimmungsreferenz für einen Verzögerungssteuerungseingriff dient; und
wenn die RMF aktiviert ist, in einem Fall, in dem die Lenkübersteuerungsschwellenwerte (OTdr, OTdl) bei der Inaktivierung der RMF zu den Lenkübersteuerungsschwellenwerten (OTrr, OTrl) bei der Aktivierung der RMF geändert werden, der Verzögerungsübersteuerungsschwellenwert zu einem größeren Wert (OPr) als der Verzögerungsübersteuerungsschwellenwert (OPd) bei der Inaktivierung der RMF gesetzt wird.

5. Fahrsteuerungsvorrichtung für ein Fahrzeug (1) nach Anspruch 4, wobei
der Beschleunigungsübersteuerungsschwellenwert (OEr) bei der Aktivierung der RMF zu einem größeren Wert als der Verzögerungsübersteuerungsschwellenwert (OPr) bei der Aktivierung der RMF gesetzt wird.

6. Fahrsteuerungsvorrichtung für ein Fahrzeug (1) nach Anspruch 5, wobei
der Lenkübersteuerungsschwellenwert (OTrr, OTrl) bei der Aktivierung der RMF einen ersten RMF-Lenkübersteuerungsschwellenwert (OTrr1, OTrl1) und einen zweiten RMF-Lenkübersteuerungsschwellenwert (OTrr2, OTrl2) umfasst, der größer als der erste RMF-Lenkübersteuerungsschwellenwert (OTrr1, OTrl1) ist;
der Beschleunigungsübersteuerungsschwellenwert (OEr) bei der Aktivierung der RMF einen ersten RMF-Beschleunigungsübersteuerungsschwellenwert (OEr1) und einen zweiten RMF-Beschleunigungsübersteuerungsschwellenwert (OEr2) umfasst, der größer als der erste RMF-Beschleunigungsübersteuerungsschwellenwert (OEr1) ist;
der Verzögerungsübersteuerungsschwellenwert (OPr) bei der Aktivierung der RMF einen ersten RMF-Verzögerungsübersteuerungsschwellenwert (OPr1) und einen zweiten RMF-Verzögerungsübersteuerungsschwellenwert (OPr2) umfasst, der größer als der erste RMF-Verzögerungsübersteuerungsschwellenwert (OPr1) ist;
die Fahrsteuerungsvorrichtung so vorgesehen ist, dass sie den ersten RMF-Lenkübersteuerungsschwellenwert (OTrr1, OTrl1), den ersten RMF-Beschleunigungsübersteuerungsschwellenwert (OEr1) und den ersten RMF-Verzögerungsübersteuerungsschwellenwert (OPr1) von dem Zeitpunkt an, an dem die RMF in der Nähe einer Kreuzung aktiviert wird, bis zu dem Zeitpunkt, an dem das Lenken an der Kreuzung durchgeführt wird, einstellt; und nachdem das Lenken an der Kreuzung durchgeführt wird, der erste RMF-Lenkübersteuerungsschwellenwert (OTrr1, OTrl1), der erste RMF-Beschleunigungsübersteuerungsschwellenwert (OEr1) und der erste RMF-Verzögerungsübersteuerungsschwellenwert (OPr1) zu dem zweiten RMF-Lenkübersteuerungsschwellenwert (OTrr2, OTrl2), dem zweiten RMF-Beschleunigungsübersteuerungsschwellenwert (OEr2) und dem zweiten RMF-Verzögerungsübersteuerungsschwellenwert (OPr2) geändert werden.

## Revendications

1. Appareil de commande de conduite pour un véhicule (1) doté d'un dispositif de fonctionnement automatisé (10) pour exécuter une conduite automatisée par surveillance et commande à distance, présentant :
une fonction d'atténuation des risques (RMF) qui exécute une commande d'atténuation des risques pour arrêter le véhicule (1) au niveau d'un emplacement d'arrêt cible (S) en cas de défaut de communication avec une station de base de commande à distance pour la surveillance et la commande à distance ; et
une fonction de remplacement qui arrête la conduite automatisée par le dispositif de fonctionnement automatisé (10) et passe à un mode de conduite manuel en réponse à une intervention de commande d'un occupant ou d'un passager du véhicule (1), **caractérisé en ce que**
le dispositif de fonctionnement automatisé (10) est configuré :
pour exécuter une recherche d'une pluralité de candidats d'emplacement d'arrêt cible sur la base d'informations d'emplacement du véhicule (1) et d'informations cartographiques pendant la conduite automatisée en préparation de l'activation du RMF ; et
dans un cas où un candidat d'emplacement d'arrêt cible situé sur un chemin différent d'un chemin cible de conduite automatisée est sélectionné, en tant qu'emplacement d'arrêt cible (S), parmi la pluralité de candidats d'emplacement d'arrêt cibles lorsque le RMF est activé à proximité d'une intersection, pour modifier une valeur seuil de remplacement servant de référence de détermination pour l'intervention de commande par l'occupant ou le passager pour activer la fonction de remplacement à une valeur supérieure à une valeur seuil de remplacement lorsque le RMF est inactif.

2. Appareil de commande de conduite pour un véhicule (1) selon la revendication 1, dans lequel :
la valeur seuil de remplacement comporte une valeur seuil de remplacement de direction servant de référence de détermination pour une intervention de commande de direction ; et
la valeur seuil de remplacement de direction (OTrr, OTrl) lorsque le RMF est actif à proximité d'une intersection est définie de sorte qu'une valeur seuil de remplacement de direction pour une direction tournant le long du chemin cible au niveau de l'intersection est supérieure à une valeur seuil de remplacement de direction pour une direction opposée à la direction tournant le long du chemin cible au niveau de l'intersection.

3. Appareil de commande de conduite pour un véhicule (1) selon la revendication 2, dans lequel :
la valeur seuil de remplacement comporte une valeur seuil de remplacement d'accélération servant de référence de détermination pour une intervention de commande d'accélération ; et
lorsque le RMF est activé, dans un cas où les valeurs seuil de remplacement de direction (OTdr, OTdl) lorsque le RMF est inactif sont modifiées en valeurs seuil de remplacement de direction (OTrr, OTrl) lorsque le RMF est actif, la valeur seuil de remplacement d'accélération est définie sur une valeur supérieure (OEr) à la valeur seuil de remplacement d'accélération (OEd) lorsque le RMF est inactif.

4. Appareil de commande de conduite pour un véhicule (1) selon la revendication 3, dans lequel :
la valeur seuil de remplacement comporte une valeur seuil de remplacement de décélération servant de référence de détermination pour une intervention de commande de décélération ; et
lorsque le RMF est activé, dans un cas où les valeurs seuil de remplacement de direction (OTdr, OTdl) lorsque le RMF est inactif sont modifiées en valeurs seuil de remplacement de direction (OTrr, OTrl) lorsque le RMF est actif, la valeur seuil de remplacement de décélération est définie sur une valeur supérieure (OPr) à la valeur seuil de remplacement de décélération (OPd) lorsque le RMF est inactif.

5. Appareil de commande de conduite pour un véhicule (1) selon la revendication 4, dans lequel
la valeur seuil de remplacement d'accélération (OEr) lorsque le RMF est actif est définie sur une valeur supérieure à la valeur seuil de remplacement de décélération (OPr) lorsque le RMF est actif.

6. Appareil de commande de conduite pour un véhicule (1) selon la revendication 5, dans lequel :
la valeur seuil de remplacement de direction (OTrr, OTrl) lorsque le RMF est actif comporte une première valeur seuil de remplacement de direction RMF (OTrr1, OTrl1) et une seconde valeur seuil de remplacement de direction RMF (OTrr2, OTrl2) supérieure à la première valeur seuil de remplacement de direction RMF (OTrr1, OTrl1) ;
la valeur seuil de remplacement d'accélération (OEr) lorsque le RMF est actif comporte une première valeur seuil de remplacement d'accélération RMF (OEr1) et une seconde valeur seuil de remplacement d'accélération RMF (OEr2) supérieure à la première valeur seuil de remplacement d'accélération RMF (OEr1) ;
la valeur seuil de remplacement de décélération (OPr) lorsque le RMF est actif comporte une première valeur seuil de remplacement de décélération RMF (OPr1) et une seconde valeur seuil de remplacement de décélération RMF (OPr2) supérieure à la première valeur seuil de remplacement de décélération RMF (OPr1) ;
l'appareil de commande de conduite est configuré pour définir la première valeur seuil de remplacement de direction RMF (OTrr1, OTrl1), la première valeur seuil de remplacement d'accélération RMF (OEr1) et la première valeur seuil de remplacement de décélération RMF (OPr1) à partir du moment où le RMF est activé à proximité d'une intersection jusqu'à avant l'exécution de la direction à l'intersection ; et
après l'exécution de la direction à l'intersection, la première valeur seuil de remplacement de direction RMF (OTrr1, OTrl1), la première valeur seuil de remplacement d'accélération RMF (OEr1) et la première valeur seuil de remplacement de décélération RMF (OPr1) sont modifiées en la seconde valeur seuil de remplacement de direction RMF (OTrr2, OTrl2), la seconde valeur seuil de remplacement d'accélération RMF (OEr2) et la seconde valeur seuil de remplacement de décélération RMF (OPr2) .
